# EUROPEAN PATENT SPECIFICATION

(11) **EP 3 475 911 B1**
(45) Date of publication and mention of the grant of the patent: **06.05.2026**
(21) Application number: 16731868.2
(22) Date of filing: 22.06.2016
(51) Int. Cl.: G06Q 40/08

(54) **LIFE INSURANCE SYSTEM WITH FULLY AUTOMATED UNDERWRITING PROCESS FOR REAL-TIME UNDERWRITING AND RISK ADJUSTMENT, AND CORRESPONDING METHOD THEREOF**
LEBENSVERSICHERUNGSSYSTEM MIT VOLLAUTOMATISCHEN ZEICHNUNGSPROZESS FÜR RISIKOEINSCHÄTZUNG UND RISIKOANPASSUNG IN ECHTZEIT UND ZUGEHÖRIGEN VERFAHREN
SYSTÈME D'ASSURANCE-VIE AVEC PROCEDE DE DESSIN AUTOMATIQUE POUR ÉVALUATION ET AJUSTEMENT DES RISQUES EN TEMPS REEL ET PROCEDE ASSOCIE

(43) Date of publication of application: 01.05.2019
(73) Proprietor: Swiss Reinsurance Company Ltd., 8022 Zürich (CH)
(72) Inventor: NAYAK, Nitinchandra, Ossining, NY 10562 (US); OLSEN, Jayne, Ridgefield, CT 06877 (US); SREE NANDY, Nanditha, Ridgefield, CT 06877 (US); ABROKWAH, Stephen Ofori, Danbury, CT 06811 (US); MARTIN, Joy, Brooklyn, NY 11215 (US); YUNG, Jimmy, NY 11218 (US)
(74) Representative: Leimgruber, Fabian Alfred Rupert
(86) International application number: PCT/EP2016/064425
(87) International publication number: WO 2017/220140

(56) References cited:
- US-A1- 2009 144 095

## Description

### Field of the Invention

The present invention relates to automated life and/or mortality classification, signaling and automated underwriting systems for real-time risk assessment and adjustment. Based on the real-time risk assessment and adjustment, specific risks associated with a risk-exposed individual are transferable from the risk-exposed individual to an automated insurance system by means of an expert system providing a fully automated underwriting risk transfer process based on the expert risk assessment and forecast classification.

### Background of the Invention

The problems associated with risk transfer and risk pooling are integral elements in the operation of life insurance systems. By grouping individuals' risk, the insurance systems are able to cover losses based on possibly future arising risks, out of a common pool of resources captured by the insurance systems from associated individuals for the transfer of their risks. However, in order to maintain some degree of equity among individuals exhibiting different mortality risks, i.e., in order to derive a balance between a specific individual's transferred risk and the amount of its resources pooled in return, the insurance systems must capture, assess and classify the individual's risk according to appropriately selected or filtered criteria and accepted characteristics. Automated classification is the process of assigning an input pattern to one of a predefined set of classes. Classification problems exist in many real-world applications, such as medical diagnosis, machine fault diagnosis, handwriting character recognition, fingerprint recognition, and credit scoring, to name a few. Broadly speaking, classification problems can be categorized into two types: dichotomous classification and polychotomous classification. Dichotomous classification deals with two-class classification problems, while polychotomous classification deals with classification problems that have more than two classes.

Classification consists of developing a functional relationship between the input features and the target classes. Accurately estimating or forecasting such a relationship for future events is key to for precise classifier systems. Instrument or object underwriting, such as requests for human risk transfers, financial credits or loan risk transfers, catastrophe risk transfer or liability risk transfer is another area where these classification problems exist. An automated underwriting process for a risk instrument or object may consist of assigning a given real world object, described by its risk factors and other key input parameters, to one of several risk categories (also referred to as risk or rate classes). A trained human expert traditionally performs risk instrument or object underwriting, since this is normally a highly complex and non-linear process comparable to automated weather forecast systems, cannot be automated as such. A given application of factors for the specific risk instrument or object may be compared to a variety of underwriting rules/standards sets, which are typically predefined. Using underwriting rules/standards enables the instrument or object application to be classified into one of several risk categories available for a type of coverage requested by an applicant. The risk categories can affect the payment transfer structure (e.g., in terms of amount and timing) paid for the applied object or instrument, e.g., the higher the risk category, the higher the overall payment transfer balancing the corresponding risk transfer. A decision to accept or reject the risk transfer for the instrument or object may also be part of this risk classification, as risks above a certain tolerance threshold value may simply be rejected.

One problem associated with this approach in underwriting an instrument request is that there are a large number of features (individual measuring parameter, external or environmental measuring parameters, financial parameters, credit rating parameters, corporate structure parameters, market parameters) and rules/standards that underwriters must take into account in assigning the instrument request to one of several risk categories (or rate classes). With the large number of features, rules/standards and risk categories, it is very difficult and time consuming or even impossible, especially for human experts, to consider all of the information necessary to make a decision; furthermore, the results are often inadequate in terms of consistency and reliability. The inadequacy of this process becomes more apparent as the complexity of object or instrument applications increases.

Another technical problem with automated underwriting processes is that the underwriting standards typically do not cover all possible cases and variations of a request for risk transfer of a real world object or instrument. The underwriting standards may even be self-contradictory or ambiguous, leading to uncertain application of the standards. As a result, the subjective judgment of the underwriter may play a role in the process. Variations in factors such as human underwriter training and experience and a multitude of other effects can cause different underwriters to issue different, inconsistent decisions. Sometimes these decisions can be in disagreement with the established underwriting standards of the risk transfer system, while sometimes they can fall into a "gray area" not explicitly covered by the underwriting standards. Further, there may be cases in which an underwriting decision could still be considered correct, even if it disagrees with the predefined underwriting standards. This situation can be caused when underwriting is based on real-world experience to determine whether the underwriting standards should be adjusted. Different underwriters may make different determinations about when these adjustments are allowed, as they might apply stricter or more liberal interpretations of the underwriting standards. Thus, the judgment of experienced underwriters may be in conflict with the desire to apply the underwriting standards consistently.

Historically, for a given risk transfer with a specific underwriting process, rates have been triggered by age and sex, and approximately nine-tenths of applicants have been accepted at the standard rate, the rest being individually rated or declined. However, beginning in the late 1960s, insurance systems started to measure and consider more criteria; for example, non-smokers were charged lower rates. In the early 1990s, the process of adjusting the insurance systems' risk assessment further expanded to segregated sex and smoker-distinct live risks employing other criteria. This continued segmentation of the standard class attempts to reduce mortality cross-subsidies in which better risks financially subsidize poorer risks, and thus refining and stabilizing the overall operation of the insurance systems. Each of a newer and smaller class is expected to display a narrower distribution of mortality than the larger class from which it emerged. In this application, preferred lives or life risks are risks chosen according to measurable and triggerable criteria in addition to sex and tobacco use and which are expected to experience lower mortality as a group than the remaining non-rated lives of the same age, known as residual lives or residual lives risks or residual standard. So-called preferred life insurance systems are characterized by the generation of separate premium rates for preferred and residual live risks of the same age classified into two or more classes based on expected differing mortality.

A selected preferred group is expected to exhibit, on average, lower mortality than the residual group of individuals' risks. This does not mean that all preferred live risks have a lower expected mortality than all residual lives, but that, when taken as a group, they can be expected to. At a most elementary level in the prior art, the preferred lives concept, implemented in insurance systems, divides the standard sex- and smoker-distinct class into two classes by the use of certain admission criteria, which are objectively defined and measured and which are known to be predictive of relative mortality. At the extreme end of the application of the preferred life insurance system, this method results in a unique rate charged for a particular individual based on that individual's unique mortality risk profile. As long as death remains haphazard, the operational principle of the insurance systems is left intact. By removing any existent mortality cross-subsidy from the insured pool, i.e., the pooled individuals' risks by the insurance system, the most dissected, preferred life insurance systems represents the opposite of charging all pooled, i.e., insured, individuals an identical rate, thereby balancing the risk over all associated individuals whose risk was transferred to the system. Therefore, such systems operate on complete risk transfer equity as opposed to complete risk transfer equality.

A critical point for the operational risk management for such insurance systems typically involves consideration of one or more criteria, which are correlated to an event or events influencing the transferred risk. The ability to predict the frequency or eventual likelihood of occurrence of such critical events has value and utility in many settings. Often, different insurance systems use different sets of criteria to assess the expected occurrence of the same (or similar) events. In some cases, the same insurance systems may also use different criteria sets in differing situations or differing times. Methods and systems for comparing different criteria sets are useful tools in the selection of criteria and the design and development of related products. However, in the case of coupling the insurance system with a second insurance system, such as a mutually synchronized reinsurance system for seamless risk transfer within a negotiated parameter range, or in order to compare products from competing insurance systems, or designing new preferred products to replace or augment existing products, the differing operation of the insurance systems makes it difficult or even impossible to use methods able to take such differences into account. Clearly, such a comparison may also be useful in the selection of criteria and pricing of related products, and in determining the impact of criteria changes or granting various exceptions to criteria on pricing and potential profitability of such products.

Another critical point for the operation of such insurance systems is the complex process for assessing the appropriate risk of an individual on a mortality-consistent basis. A mortality-consistent basis means that a generated mortality assumption for a certain value or parameter is providing a correct value to individuals using the mortality-consistent. This is especially important for coupling a plurality of primary insurance systems to a second insurance system, i.e., a reinsurance system, to hedge the operational risk and improve stability of the first insurance system by transferring the pooled individuals' risks at least partly to the second insurance system. Furthermore, incorporating the thought process of underwriters during risk assessment and risk categorization is technically complex. In the prior art, there are different systems, disclosing an approach to the discussed problems. For example, patent US 4,975,840 by A. DeTore et al. discloses a system for assessing the insurability of a potentially transferrable, i.e., insurable, risk, wherein the system comprises the ability to correlate selected elements of information in respective databases. Certain elements are assigned weights, e.g., relative risk ratios, based on predetermined relationships existing between elements of information in one database and corresponding elements of information in another. A risk classification is determined for the potentially insurable risk from the assigned weights. However, the weight must necessarily be assigned to a selected element based on the information in the databases manually, e.g., by an underwriter. For example, the underwriter typically must assign a risk classification based on a manual review of data and comparison with existing criteria. Furthermore, the system is not able to provide an easy-to-use, real-time risk assessment by assessing the risks and classifying and/or categorizing them as technically required by preferred life insurance systems, though the systems comprise the ability to assign a different weight to an element of information, to use statistical profiles to adjust assigned weights, and to determine expected profitably resulting from decisions concerning a particular risk manually. Thus, this system is not able to manage and reduce the workload and customize operation of the insurance system, as required. It is also not able to create an easy-to-use risk assessment and risk categorization instrument by automating and/or incorporating up-to-now necessarily, manually conducted processes. Furthermore, US 6,456,979 by B. Flagg shows another system of the prior art for assessing individuals' risks by establishing a benchmark cost of insurance value, obtaining a policy illustration for the transferred risk, resolving a cost of insurance value, and comparing the benchmark cost of insurance value with the illustrated cost of insurance value. Yet another prior art system is disclosed by US 2003/0236685 by E. Buckner et al. In this system for assessing the individual's risk, mortality data are electronically synthesized from a plurality of different insurance systems. A data engine processes the mortality data and synthesizes benchmark data to present the analyses. User inputs at remote computers are requested by the system, wherein these inputs are needed to process the risk assessment relative to one or more preferred life risk scenarios, such as age, height, weight, gender, blood pressure, cholesterol, family history of cancer, family history of heart attack, family history of stroke, smoker or non-smoker status, and smoking history.

Finally, US 2009/0144095 A1 shows an automated system for evaluating, mitigating, and managing biosafety and biosecurity risks of the prior art. The risk assessment system of US 2009/0144095 A1 can be implemented on a programmable general-purpose computer. However, the system can also be implemented on a special-purpose computer, a programmed microprocessor or micro-controller and peripheral integrated circuit elements, and ASAIC or other integrated circuits, a digital signal processor (DSP), a hardwired electronic or logic circuit, such as a discrete element circuit, a programmable logic device such as a PLD, PLA, FPGA or PAL, or the like. The automated system is able to establish biosafety and biosecurity risk management procedures, and facilitate auditing of facilities and testing individuals and companies to evaluate compliance with such procedures. The established biosafety and biosecurity risk management procedures provide automated auditing and certifying of companies, facilities, systems and individuals for compliance, and analyzing biosafety and biosecurity risks.

However, all of the prior art systems are not able to completely solve the most important technical difficulties that arise from capturing and assessing the risk that is associated with preferred incidents, i.e., the fully automated and easy-to-operate risk assessment system. The prior art systems are not able to perform real-time risk assessment for preferred life insurance system, i.e. a classification-based and/or classification-sensitive risk-transfer system. Moreover, they are not able to perform the risk assessment on a mortality-consistent basis. The ability to arrive at a precise measurement of an individual's preferred risk exposure is fundamental, *inter alia,* for the technical operation of risk-transfer systems or damage prevention/recovery systems, such as associated automated resource and risk pooling systems or automated insurance systems. The associated problem extends to the fact that the overall risk is typically spread out over various single risks. Correspondingly, the different criteria and classes should be triggered appropriately. The overall associated or pooled risk cannot be captured or weighed on an automated basis by preferred life insurance systems as envisioned by the prior art providing an appropriate risk transfer.

### Summary of the Invention

It is an object of the present invention to provide an automated real-time risk assessment, adjustment and underwriting system and method for measuring, accumulating and monitoring life risks, thereby providing an underwriting and signaling system for the transfer of specific risks associated with a risk-exposed individual from the risk-exposed individual to a first insurance system and/or from the first insurance system to an associated second insurance system based on the real-time risk assessment, adjustment and automated underwriting. Furthermore, it is also an object of the present invention to provide a system and method for risk assessment and sharing of life risks on a mortality-consistent basis. It is a further object of the present invention to provide a system and method for real-time risk assessment and sharing of life risks. It is another object of the present invention to provide a system and method making it possible to incorporate and automate the underwriting process, refining the process and allowing for the best possible risk categorization on a completely automated basis. Finally, it is an object of the present invention to provide an automated real-time system for the current underwriting process for life insurance that does not require laboratory tests (blood and/or urinalysis) or other laborious tests to ascertain by measuring the insurance applicant's smoking behavior, and which is less costly and time-intensive compared to the complex systems of the prior art. The system should allow for a rapid, automated process (seconds to minutes), such as an automated "fluid-less" underwriting process and system, competitively generating life insurance risk-transfer terms, i.e., optimized risk-transfer and payment-transfer parameter for the systems to be operated. The system should allow for substituting the mostly non-automatable underwriting process of the prior art, typically conducted by human experts.

According to the present invention, these objects are in particular achieved by the features of the independent claims. In addition, further advantageous embodiments can be derived from the dependent claims and related descriptions.

According to the present invention, the above-mentioned objects related to real-time risk assessment, adjustment, signaling and underwriting are achieved by means of an automated, real-time mortality classification and signaling system based on an automated selective multi-level triage process, wherein risks associated with a plurality of risk-exposed individuals are at least partially transferable from a risk-exposed individual to a first insurance system and/or from the first insurance system to an associated second insurance system, wherein the system comprises a table with retrievable stored risk classes each comprising assigned risk class criteria, wherein individual-specific parameters of the risk exposed individuals are captured relating to criteria of the stored risk classes by means of the system and stored in a repository unit, and wherein a specific risk class associated with the risk of the exposed individual is identified and selected from said stored risk classes via the system based on the captured parameters, in that individual-specific parameters of the risk-exposed individuals comprise at least individual-specific parameters indicating a captured self-declaration of smoking or non-smoking of the risk-exposed individuals, wherein upon triggering the individual-specific parameters indicating a captured self-declaration of smoking of a risk-exposed individual by means of first trigger parameters, the risk-exposed individual is automatically assigned to a first triage channel, in that upon triggering individual-specific parameters indicating a captured self-declaration of non-smoking of risk-exposed individuals by means of second trigger parameters, the triggered individual-specific parameters are processed by a machine learning-based pattern recognition module automatically assigning risk-exposed individuals with detected non-smoking patterns to a second triage channel as predicted non-smokers, and automatically assigning risk-exposed individuals with detected smoking patterns to a third triage channel as predicted smokers, in that for a detected risk-exposed individual in the third triage channel, the system requests and captures laboratory-scaled individual-specific parameters, wherein the laboratory-scaled individual-specific parameters are measured by means of laboratory measuring devices, and the laboratory-scaled individual-specific parameters are triggered for measured smoking and not-measured smoking, in that for the real-time risk assessment, a relative mortality factor is measured based on the captured risk-related individual data and the measured smoking or non-smoking parameter corresponding to the assigned channel, wherein based on the real-time risk assessment by means of the measured relative mortality factor, the risk associated with the risk-exposed individual is transferable from the risk-exposed individual to a first insurance system and/or from the first insurance system to the associated second insurance system. The relative mortality factor can for example be measured based on the captured individual's specific parameter assignable to corresponding risk class criteria of the risk classes, wherein the risk class criteria comprise at least a risk class criterion indicating smoking or non-smoking, and wherein for risk-exposed individuals in the first triage channel, the risk class criteria indicating smoking or non-smoking is automatically set to smoking, for risk-exposed individuals in the second triage channel to non-smoking, and for risk-exposed individuals in the third triage channel according to the laboratory-scaled, measured smoking or non-smoking parameters. For transferring a risk associated with the risk-exposed individual from the risk-exposed individual to a first insurance system and/or from the first insurance system to the associated second insurance system, an appropriate activation signaling is generated by the automated system via the control circuit and transmitted to the first insurance system and/or to the associated second insurance system and wherein the risk transfer is mutually synchronized between the first and second insurance system. The invention has, *inter alia,* the advantage that a completely automated, "fluid-less" underwriting structure can be provided by the system generating optimized life insurance terms in real-time. No costly and time-intensive processes, such as laboratory tests (blood and/or urinalysis), human interrogations or the like, are required, or are required only for a very small percentage of risk transfer requests. The inventive system is capable of completely substituting the prior art processes in the context of risk transfer underwriting and risk assessment associated with or affected by smoking and non-smoking behavior of risk exposed individual. Furthermore, the system is able to provide a high performance for the inventive, "fluid-less" underwriting process based on detecting "smoker propensity", wherein the applied smoker detection system and solution provides sensitivity, specificity that equals or exceeds prior art techniques but is fully automated, especially based on the best medical screening tests, and is unachievable thus far by all known prior art systems. The system makes it possible to identify smokers from an insurance application, which is difficult using prior art systems due to the potential large number (typically around 50%) of non-disclosed smokers, i.e., actual smokers claiming to be non-smokers. Though the prevalence of tobacco use in insurance applicants (typically around 2%-10% smokers) is usually below the general population (e.g., US population with 16%-20% smokers), the present system is capable of reliably detecting smokers using smoker characteristics, which no prior art system is able to provide. The system also provides a fully automated structure to analyze the cost impact of prediction errors (i.e., misclassification of smokers as non-smokers) and savings from the absence of lab testing for a majority of applicants. Only a very small portion of risk transfer requests have to undergo lab testing. Using the present system, it is possible to generate, dynamically and in a new way, parameters for age, gender, term, and face amount requirements for a client-specific life product that results in a positive net present value (NPV) or net present worth (NPW), which is the sum of the present values (PVs) of incoming and outgoing cash flows of the first insurance system, i.e., the benefit and cost cash flows, over a defined period of time. Furthermore, the present invention has the general advantage of being capable of providing the technical requirements for risk assessment, underwriting and sharing of life risks on a mortality-consistent basis and in a fully automated way. Further, this invention has the advantage of providing a real-time system and method for real-time risk assessment, underwriting and sharing of life risks. Finally, the present invention makes it possible to incorporate and optimize the process of underwriting by technical means, thereby refining the process and allowing for the best possible risk categorization on a completely automated, fast, real-time basis. In summary, the inventive system allows a new technical approach for automated operated, predictive risk-transfer systems, as expert systems, based on the use of (1) a predictive modelling for learning parameters about risk assessment of risk-exposed individuals; (2) a three channel triage process based on applying the predictive model parameters to captured risk-exposed individuals; (3) Cost-benefit analysis of prediction errors in part-1 in order to design life risk-transfer parameters (e.g. age, gender, term, face amounts) that have high likelihood of generating positive operational NPV (net present values) for applications processed through part-1 and part-2, which is a necessary requirement for the stable, automated operation of the system; (4) an ongoing validation process that diverts a percentage of predicted non-smokers for lab testing in order to collect results about the risk-exposed individual's actual smoking or nonsmoking habit and compare them against predicted smoking or non-smoking habit and re-learn the predictive model if comparison indicates high error rates.

In one alternative embodiment, the machine learning-based pattern recognition module is based on random forest processing as an ensemble learning structure for classification, regression and prediction, wherein the pattern recognition module operates by constructing a multitude of decision trees at training time and outputting the class that is the mode of the classes or mean prediction as regression of the individual trees. This alternative embodiment has the advantage, *inter alia,* that through the random forest processing, the random decision forests correct for decision trees' habit of overfitting to their training set. By selecting a random subset of features, it is possible to implement the "stochastic discrimination" approach to classification. Therefore, the use of random forest processing has the advantage of applying a method that is resistant to overtraining according to the theory of stochastic discrimination. Furthermore, the random forest structure allows for ranking the importance of variables in the present classification and risk assessment problem in a natural way. Note that if the parameters contain groups of parameters of correlated features of similar relevance, then smaller groups are favored over larger groups. However, in the present invention, only a small number of input parameters are needed, thus avoiding the aforementioned problem. In the present application, Random Forest predictors naturally lead to a dissimilarity measure between the observations. The present system also makes it possible to define a Random Forest dissimilarity measure between the captured data. As a result, the present system also makes it possible, via the Random Forest predictor used, to distinguish measured or captured real data from suitably generated synthetic data. The observed data are the captured unlabeled data, and the generated data are for example drawn from a reference distribution or simulated Monte Carlo distribution. The RF dissimilarity makes it possible to handle mixed variable types without problems, is invariant to monotonic transformations of the input variables, and is robust to outlying observations. The Random Forest dissimilarity also makes it easy to deal with a large number of semi-continuous variables due to its intrinsic variable selection, which is, for example, that it weighs the contribution of each variable according to how dependent it is on other variables. The application of Random Forest has the further advantage of producing for many cases the best results for the present invention. However, the result may depend on the captured or measured data set.

In another alternative embodiment, the machine learning-based pattern recognition module is based on Gradient boosting (GBM) as a machine learning structure for regression, classification and prediction, wherein the pattern recognition module operates on a set or ensemble of weak prediction structures using classifiers that are only slightly correlated with the true classification and optimization by means of an arbitrary differentiable loss function. This alternative embodiment has the advantage, *inter alia,* that it provides a prediction model in the form of a set of weak prediction models, which can for example be chosen as decision trees. It thus makes it possible to build the model in a stage-wise fashion, thereby generalizing it by allowing optimization of an arbitrary differentiable loss function.

In another alternative embodiment, the machine learning-based pattern recognition module is based on support vector machines (SVM) as a machine learning structure for regression, classification and prediction, wherein for given sets or ensembles of individual-specific parameters of the risk-exposed individuals, each is marked for one of two definable categories, and wherein the pattern recognition module builds a structure that, by assigning new sets into one category or the other, makes it a non-probabilistic binary linear classifier or a non-linear classifier depending of the chosen kernel. This alternative embodiment has the advantage, *inter alia,* of providing another technical structure for the machine learning-based pattern recognition module by means of a machine learning support vector machine (SVM, also support vector networks) allowing supervised use of learning patterns and models with controllable, associated learning algorithms in order to process the captured risk-related individual data for risk classification and assessment. However, if supervised learning of the machine learning based pattern recognition module is not possible (e.g., due to lack of appropriate historical or simulated risk-related individual data related to their smoking and/or non-smoking behavior), the support vector machine structure has the advantage that it also allows unsupervised learning for the machine learning-based pattern recognition module, thereby finding natural clustering of the captured risk-related individual data to build up the first, second and third channels of the pattern recognition module. As underlying clustering algorithm to improve the support vector machine structure, support vector clustering can be applied for unlabeled risk-related individual data or to label the captured risk-related individual data by preprocessing the data for a classification pass.

In an even further alternative embodiment, the machine learning-based pattern recognition module is based on logistic regression as a machine learning structure for regression, classification and prediction, wherein the probability of a binary response is estimated based on one or more of the individual-specific parameters as predictors. This alternative embodiment has the advantage, *inter alia,* of providing another technical structure for the machine learning-based pattern recognition module, which is not a classification method as much, but is much more based on a qualitative response or on discrete choice data processing. As a further advantage, structuring the machine learning-based pattern recognition module by means of logistic regression needs only a few assumptions in the present case, i.e., assuming a standard logistic distribution of errors. However, if the assumptions of linear discriminant analysis hold, i.e., if linear discriminant assumptions are true, the logistic regression assumptions must hold. Since the reverse is not true, logistic regression data processing requires fewer assumptions than other machine learning structures, such as discriminant data processing, and does not make assumptions on the distribution of the independent variables, which can be advantageously due to the unknown distribution of false declared non-smoking risk-exposed individuals within the true declared non-smoking risk-exposed individuals.

In a further alternative embodiment, risks associated with a plurality of risk-exposed individuals are at least partially transferable from a risk-exposed individual to a first insurance system and/or from the first insurance system to an associated second insurance system by means of the automated mortality classification system, wherein an appropriate activation signaling is generated by the automated mortality classification system and transmitted to the first insurance system and/or to the associated second insurance system. This alternative embodiment has, *inter alia,* the advantage that the risk transfer can be fully automated, controlled and monitored using the system.

In another alternative embodiment, the number of pooled risk exposure components or risk-exposed individuals (as defined below) is dynamically adapted, via the resource pooling system within the automated mortality classification system, to a range where non-covariant, occurring risks covered by the resource pooling system affect only a relatively small proportion of the total pooled risk exposure components at any given time. This alternative has, *inter alia,* the advantage that it helps to improve the operational and financial stability of the system.

In a further alternative embodiment, the further criteria and/or related measuring parameters, apart from the declared smoking/non-smoking parameter, are dynamically adapted by means of an operating module based on time-correlated incidence data for a life risk condition indicating changes in the condition of the risk component, i.e., the corresponding individual. This variant has, *inter alia,* the advantage that changes or new occurrence in the criteria or in measurements of the criteria, condition and/or boundary parameters can be dynamically captured by the system and dynamically affect the overall operation of the system based on the risk of the pooled risk exposure of the risk-exposed individual. However, the system is also able to dynamically capture the move of a risk-exposed individual from a declared non-smoker to a declared smoker, or vice versa.

In an alternative embodiment, the system comprises means to automatically negotiate the risk class criteria between the first insurance system and second insurance system. This alternative has, *inter alia,* the advantage that the system, and especially the coupling of the first and the second insurance system, can be more flexible, and moreover dynamically adapted by the first and second insurance system. As a further alternative, said one or more risk classes can be associated with one or more criteria, and the system further modifies one or more of said criteria and re-determines the relative risk ratio and determines an impact of said modification on the relative risks associated with the products. One or more of said risk classes can for example be associated with different criteria, and the system further compares the risk classes based on said relative risk ratios. Furthermore, the system can for example redefine one or more of said risk classes based on the relative risk ratio. As an alternative, the system can also determine a separate relative risk ratio for sub-groups of risks, also in relation to the parameter of declared smokers/non-smokers. The system also can for example compare the prevalence data to industry empirical data for particular combinations of criteria, and adjusts the stored data to agree with the empirical data. All of these alternatives have, *inter alia,* the advantage that they make it possible to further improve the operation and the operational stability of the system during operation. Furthermore, they allow a more precise risk assessment for the pooling of life risks.

In yet another alternative embodiment, upon each triggering of an occurrence of measuring parameters indicating the occurrence of a life risk, a non-parametric payment or a total parametric payment is allocated with this triggering, and wherein the total allocated payment is transferrable upon the triggering of the occurrence of the life risk. This has the advantage, *inter alia,* that the inventive system is able to set amount limits, e.g., minima and maxima, for various first insurance systems and/or risk-exposed individuals. In the alternative embodiment of parametric payment, the payment can be leveled with regard to a predefined total payment sum that is determined at least based on the risk-related individual's data, and/or on the likelihood of the risk exposure for one or a plurality of the pooled risk-exposed individuals based on the risk-related data. The predefined total payments can for example be leveled to any appropriate lump sum or any other sum related to the total transferred risk and the amount of the periodic payments of the risk exposure component. This alternative has the advantage, *inter alia,* that the overall operation of the real-time automated mortality classification system together with the first and/or second insurance system can be fully automated. Furthermore, the parametric alternative has the advantage, *inter alia,* that the transfer of the payment by the automated insurance system, which depends on the measuring of an occurrence of a life risk event, allows for an adapted payment of the total sum that is dependent on the determined impact of the life risk event on the risk-exposed individual. In one alternative embodiment, a periodic payment transfer from the risk-exposed individual to a resource pooling system of the first insurance system via a plurality of payment receiving modules is requested by means of a monitoring module of the resource-pooling system, and wherein the risk transfer or protection for the risk-exposed individual is interrupted by the monitoring module, when the periodic transfer is no longer detectable by means of the monitoring module. As an alternative, the request for periodic payment transfers can be interrupted automatically or waived by means of the monitoring module, when the occurrence of indicators for a life risk event is triggered in a data flow pathway associated with a risk-exposed individual. These alternative embodiments have, *inter alia,* the advantage that the system allows for a further automation of the monitoring operation, especially of its operation with regard to the pooled resources. In addition, an independent verification trigger of the first or second insurance system can for example be activated in cases of a triggering of the occurrence of indicators for a life risk event in the data flow pathway of a risk-exposed individual by means of the trigger module, and wherein the independent verification trigger is additionally triggering for the occurrence of indicators regarding the concerned life risk event in an alternative data flow pathway with independent measuring parameters from the primary data flow pathway of the individual in order to verify the occurrence of the life risk event at the risk-exposed individual. As an alternative, the transfer of payments is only assigned to the corresponding risk-exposed individual if the occurrence of the life risk event at the risk-exposed individual is verified by the independent verification trigger. These alternative embodiments have, *inter alia,* the advantage that they help improve the operational and financial stability of the first and second insurance system. In addition, the system is rendered less vulnerable relative to fraud and counterfeit.

Finally, in addition to the system as described above and the corresponding method, the present invention also relates to a computer program product that includes computer program code means for controlling one or more processors of the control system in such a manner that the control system performs the proposed method; and it relates, in particular, to a computer program product that includes a computer-readable medium containing the computer program code means for the processors.

### Brief Description of the Drawings

The present invention will be explained in more detail by way of example in reference to the drawings, in which:

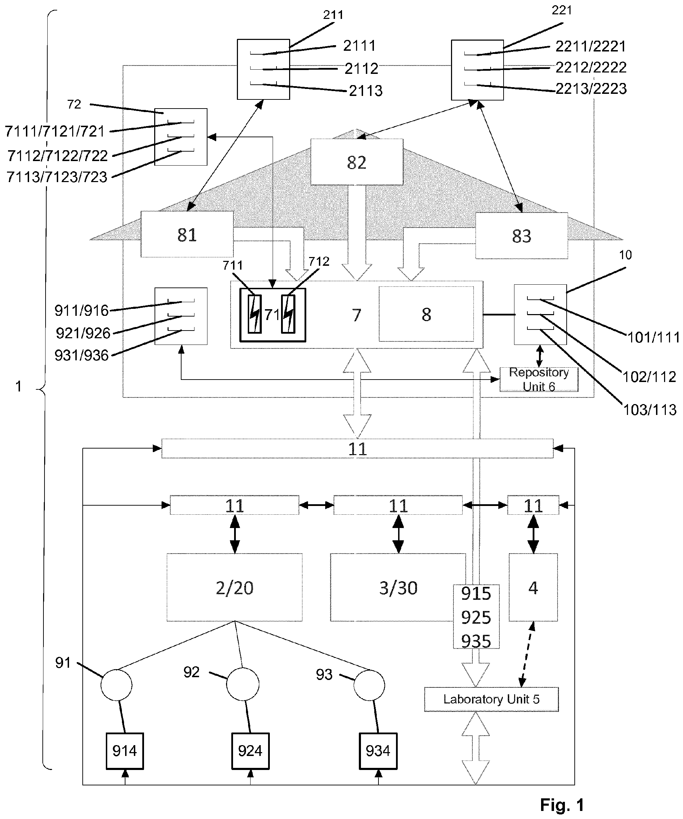

Figure 1 shows a block diagram schematically illustrating an exemplary automated mortality classification, underwriting and signaling system 1 for real-time risk assessment, adjustment and underwriting based on an automated selective multi-level triage process 81, 82, 83, i.e., with a distinct channel-based scheme 81, 82, 83. Individual-specific parameters 911, 921, 931 of the risk-exposed individuals 91, 92, 93 comprise at least parameters indicating captured self-declaration of smoking or non-smoking of a risk-exposed individual 91, 92, 93, wherein upon triggering 71/711/712 the individual-specific parameters 916, 926, 936, the risk-exposed individual 91, 92, 93 is automatically assigned to one of the triage channels 81, 82, 83. Upon triggering 72/721 parameters 916, 926, 936 indicating captured self-declaration of non-smoking, the triggered individual-specific parameters 911, 921, 931 are processed by a machine learning-based pattern recognition module 8, automatically assigning risk-exposed individuals 91, 92, 93 with detected with detected smoking patterns 8311, 8312, 8313 to the third triage channel 83 for capturing laboratory-scaled parameters measuring smoking or non-smoking through lab measurements.

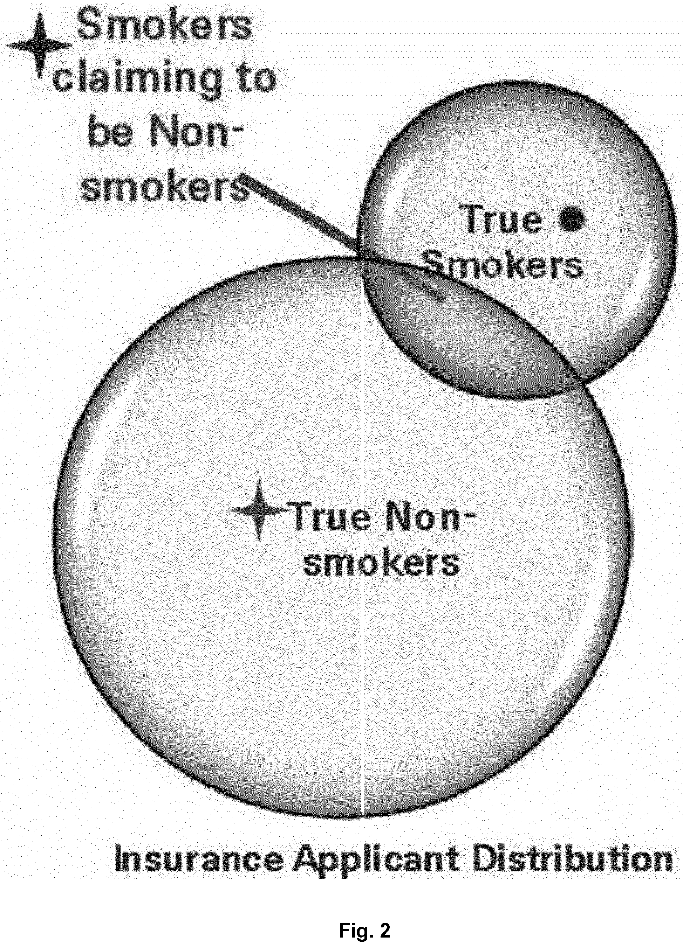

Figure 2 shows block diagrams schematically illustrating the distribution of risk-exposed individuals requesting risk transfer for life risks, wherein the intersecting set shows smoking risk-exposed individuals 91, 92, 93 claiming to be non-smokers.

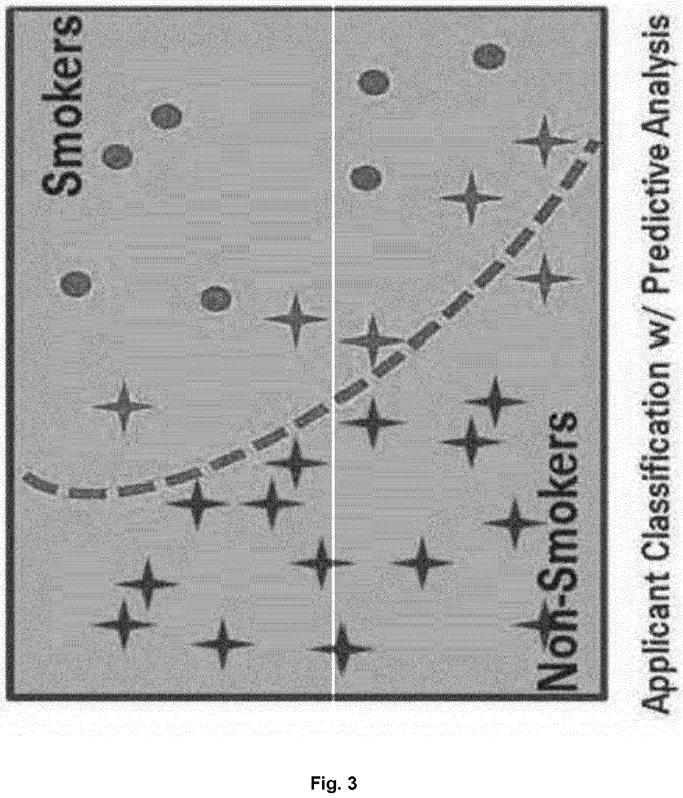

Figure 3 show block diagrams schematically illustrating the approach to predict non-smokers by means of the machine learning-based pattern recognition module 8. This technical approach to predicting non-smokers is advantageous, since a higher accuracy can be achieved versus approaches with smoker prediction (accuracy (97%+ vs. 68%))

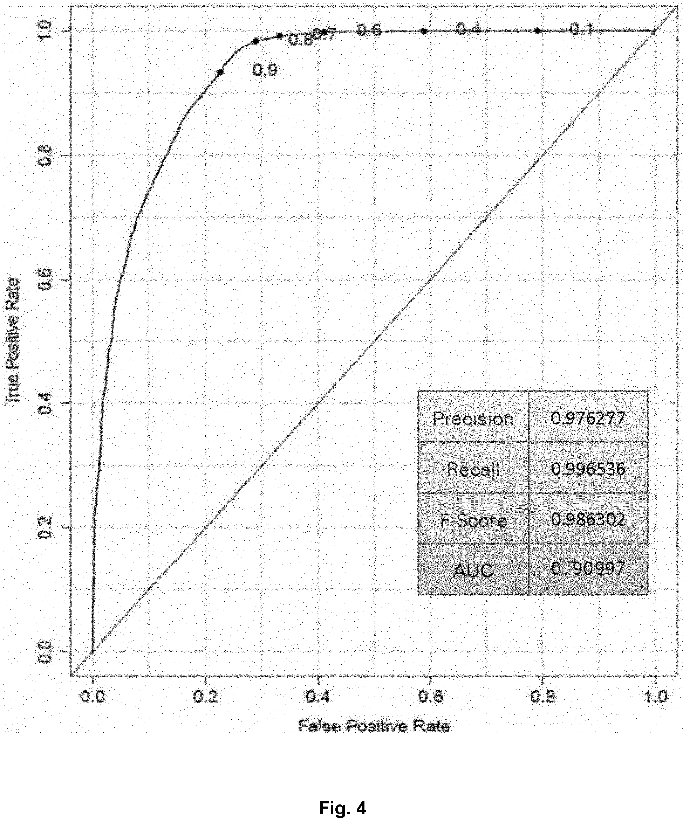

Figure 4 show block diagrams illustrating a schematic exemplary illustration of the quality of the non-smoker prediction performance by means of the inventive system, wherein the performance is good on several metrics with (i) Recall (R): What percent of non-smokers in the population are correctly identified?; (ii) Precision (P): What percent of predicted non-smokers are indeed actual non-smokers?; (iii) F-score (F): Useful metric for skewed class population F = 2*P*R / (P + R); (iv) Area under ROC curve (AUC): Higher value (closer to 1) indicates good prediction performance. To produce the machine learning-based pattern recognition module 8, it can be found that for the machine learning techniques applied to the pattern recognition module 8, logistic regression tends to result in poor accuracy, Support Vector Machine (SVM) in unacceptable accuracy, Gradient boosting (GBM) in acceptable accuracy, and Random Forest giving the best performance. However, the applicability of a machine learning technique typically depends on the measured or captured data, and thus may be different for different data sets.

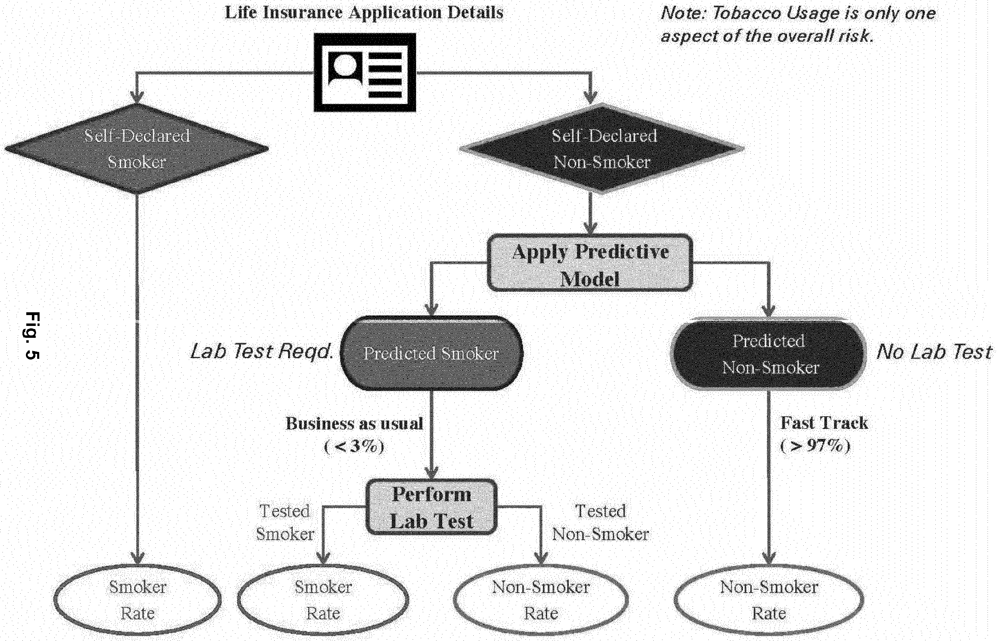

Figure 5 shows a block diagram schematically illustrating the triage-based three channel 81/82/83 underwriting fast-track processing for a majority of the applicants ( > 97%) by means of the inventive system 1. Fewer than 3% need further lab testing, while for all others, a real-time risk assessment and underwriting parameter generation is provided by the system 1.

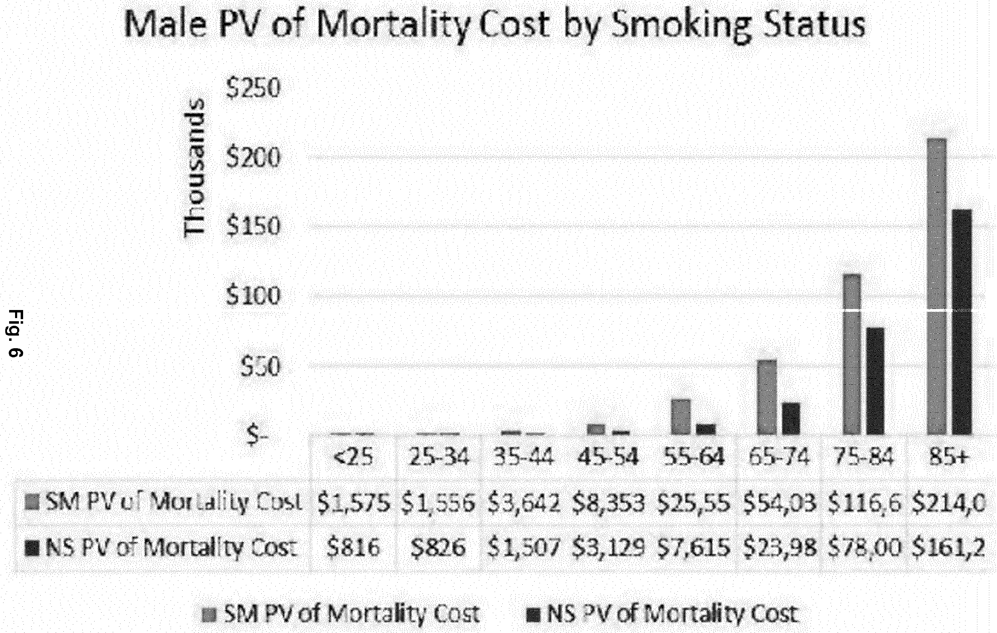

Figure 6 shows a block diagram schematically illustrating historical data on the male present value (PV) of mortality cost by smoking status.

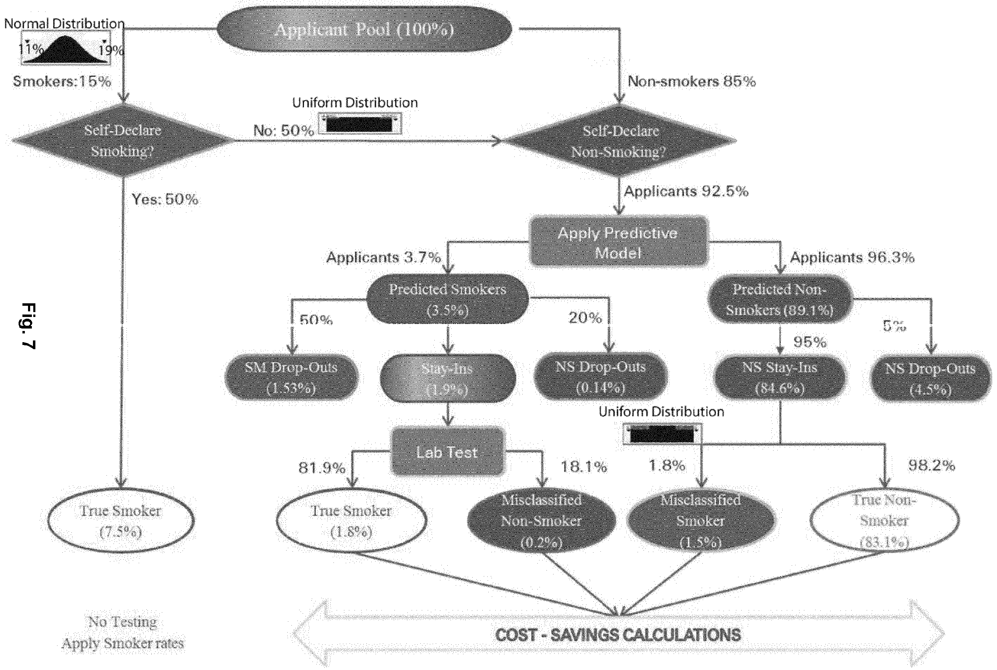

Figure 7 shows a block diagram schematically illustrating a triage-based generation of NPV of life risk-transfer, i.e., of cost saving, using the prediction model output of figure 3 and the historical data of figure 6.

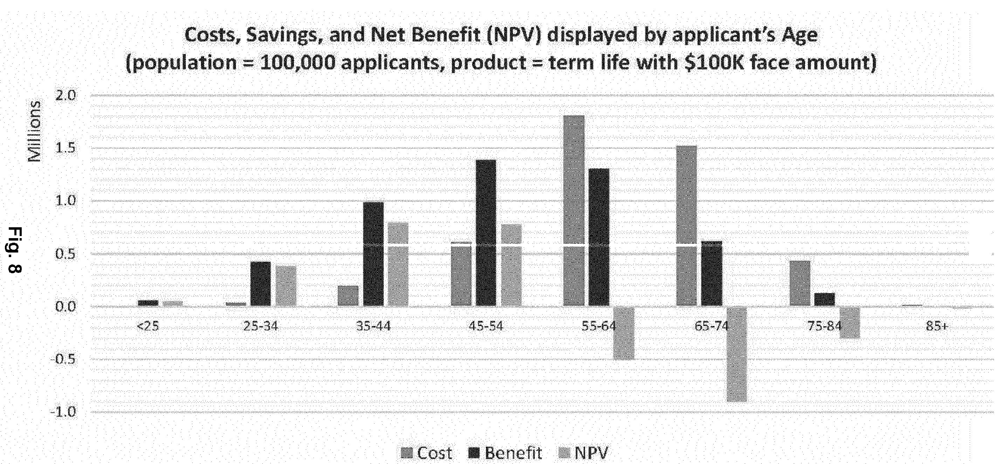

Figure 8 shows a block diagram schematically illustrating an example of a net present value (NPV) of a 10-year term life risk transfer with an exemplary $100K face amount provided to both male and female risk-exposed individuals 91, 92, 93. It can be seen that for ages below 55, the lab test savings are higher than the mortality costs, while for ages 55 and beyond, the mortality costs are higher than the lab test savings.

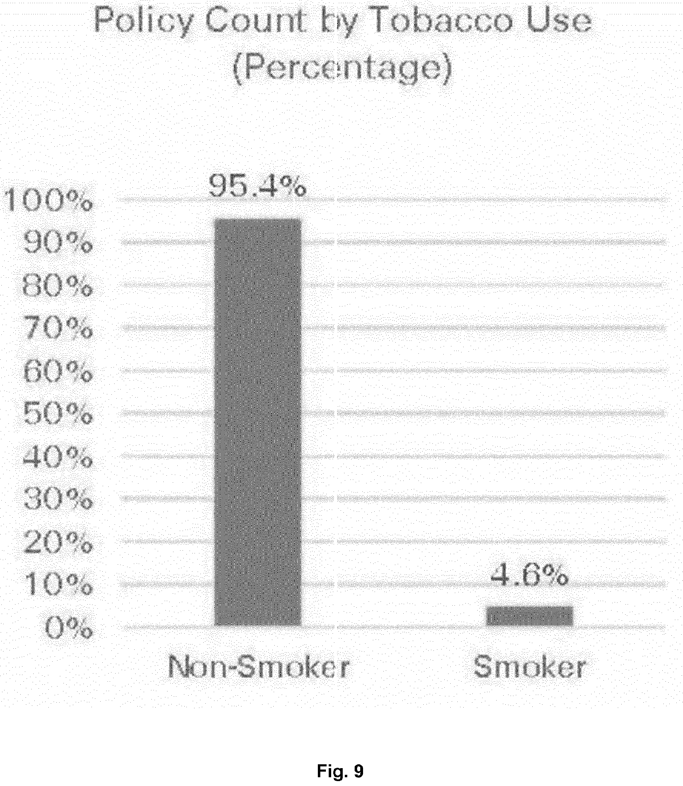

Figure 9 shows a block diagram schematically illustrating an example of risk transfer distribution by non-smoking and smoking risk-exposed individuals 91, 92, 93. Figure 9 shows the skewed class population - non-smokers (95%) vs. smokers (5%), wherein stratified sampling is used instead of random sampling.

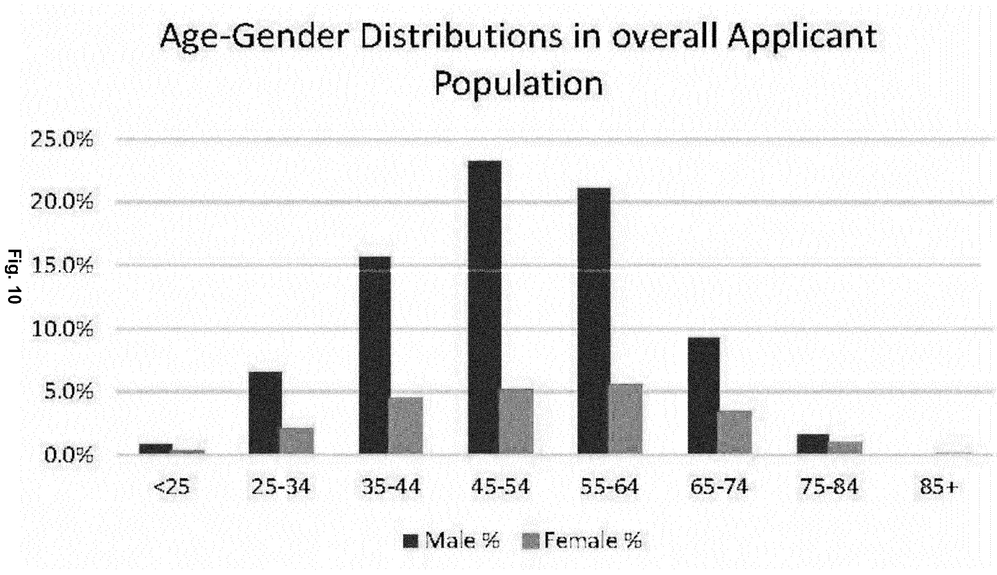

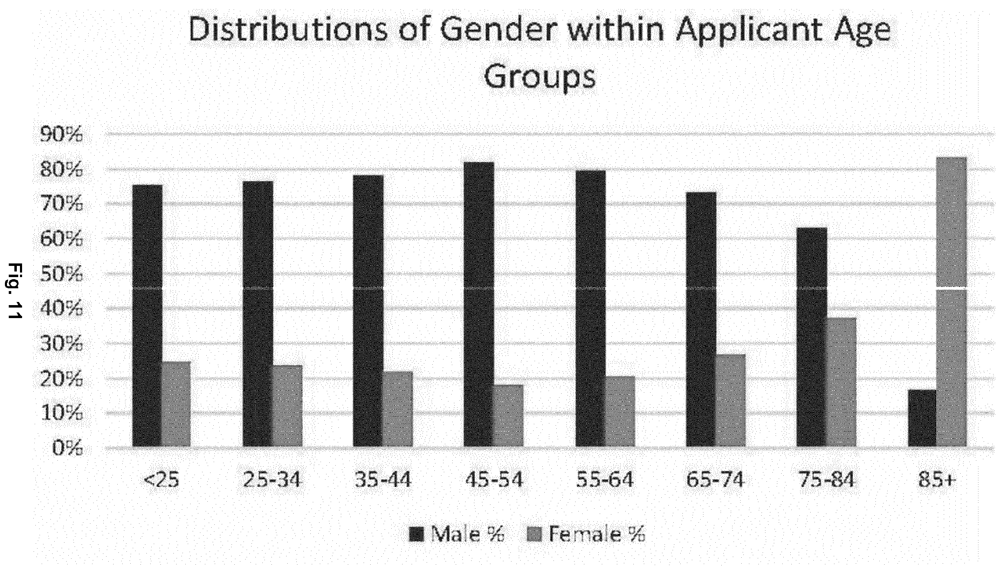

Figures 10 and 11 show block diagrams schematically illustrating examples of age-gender distributions, wherein figure 10 shows age-gender distributions in the overall applicant population and figure 11 shows the distributions of gender within the risk-exposed individuals' 91, 92, 93 age groups.

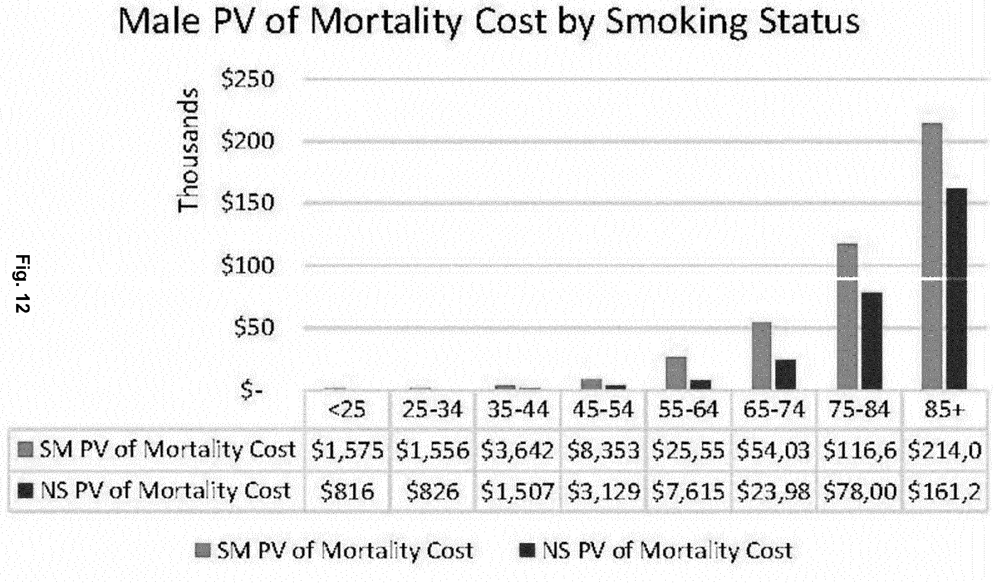

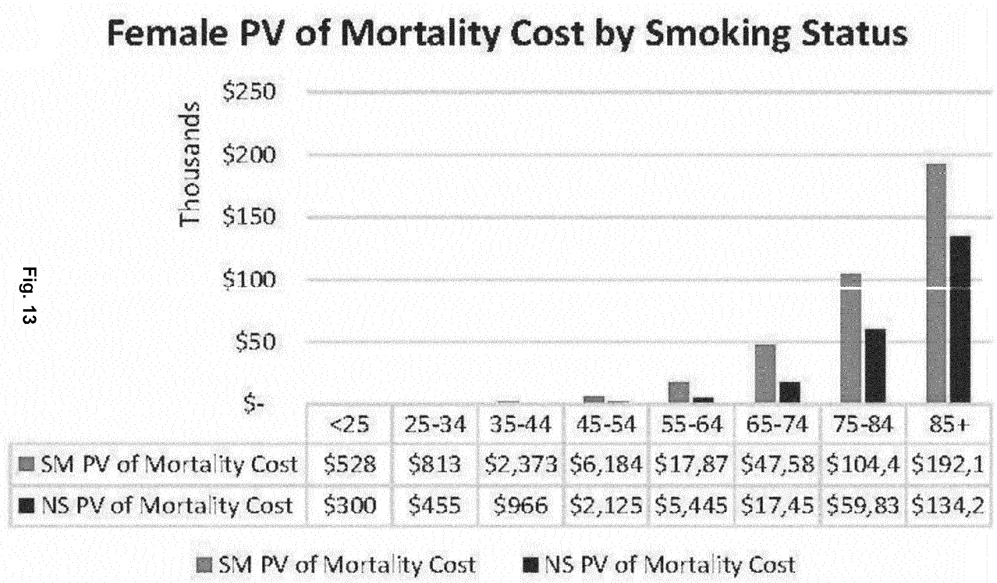

Figures 12 and 13 show block diagrams schematically illustrating examples of present values (PV) of mortality cost distributions by smoking status, wherein figure 12 shows male present values of mortality cost by smoking status, and figure 13 shows female present values of mortality cost by smoking status.

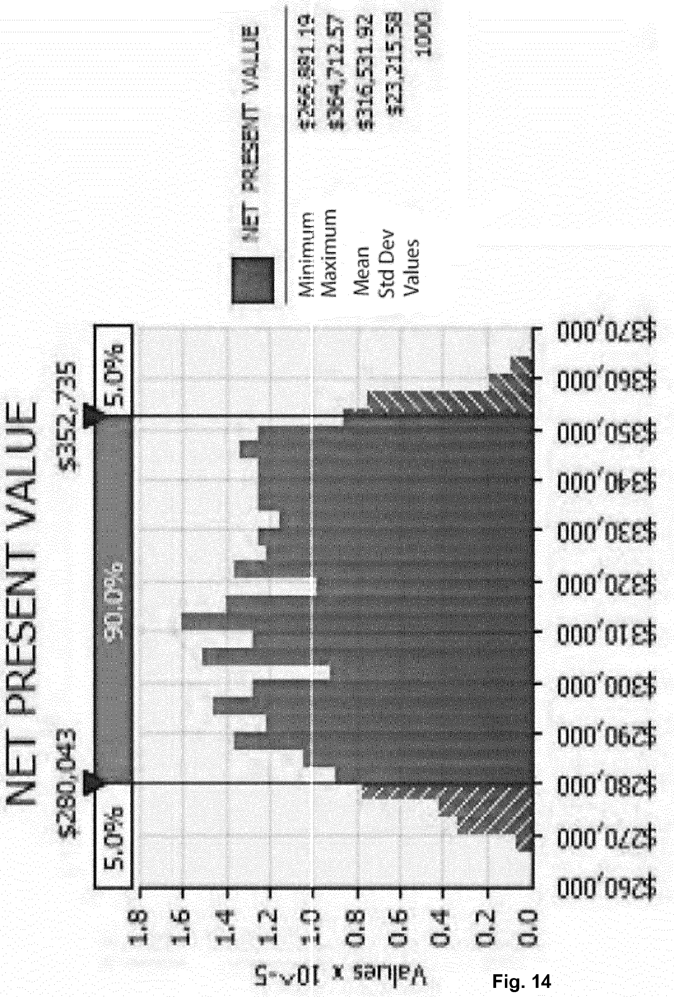

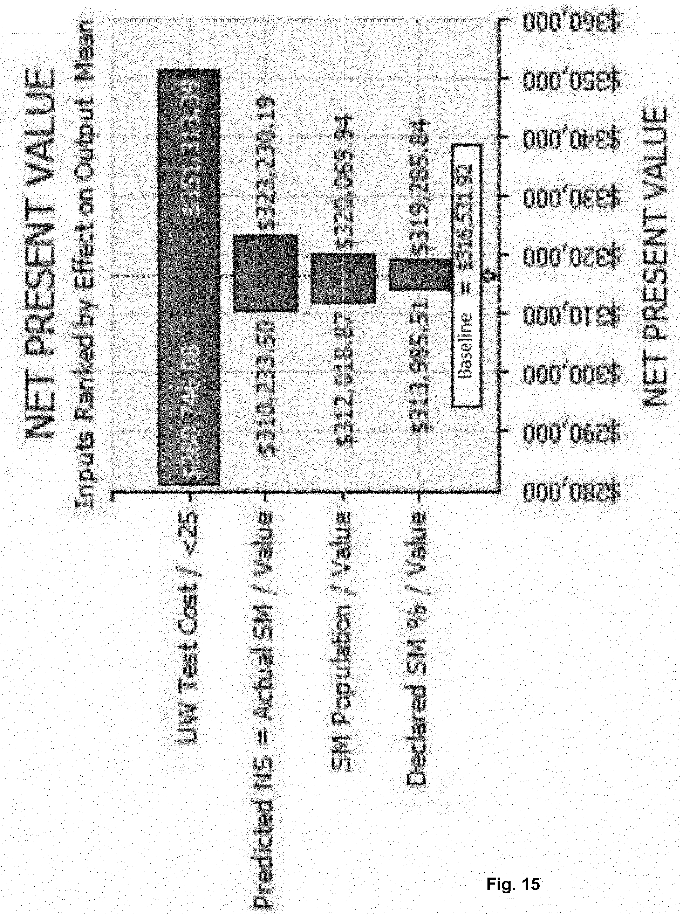

Figures 14 and 15 show block diagrams schematically illustrating examples of the transferred risk 9 in net present values (NPV) using a Monte Carlo simulation technique for generating the samples. The dynamic range shows uncertainty associated with single values of the net present values.

### Detailed Description of the Preferred Embodiments

Figure 1 schematically illustrates an architecture for one possible implementation of an embodiment of the automated mortality classification, real-time assessment and dynamic underwriting system 1 for the measurement and accumulation of life risks 9, as well as an architecture for a possible implementation of an embodiment of an automated life-risk insurance system 1 based on a first automated insurance system 2 and/or a second insurance system 3 with associated first and second electronically automated resource pooling systems 20/30 for risk sharing of life risks 9 of a variable number of risk-exposed individuals 91, 92, 93. Resource pooling systems 20/30 are systems for automated pooling of resources, e.g., electronically poolable monetary parameters, from assigned risk-exposed individuals 91, 92, 93, thereby transferring a defined individual risk 913, 923, 933 or portions of the total risk 9 associated with the risk-exposed individuals 91, 92, 93, ..., to the resource pooling systems 20/30, wherein the operation of the transferred risk is defined by first and second risk transfer parameters 211, 212, 213/311, 312, 313, as for example set using predefined risk transfer policies, and wherein in case of triggering of the occurrence of the defined life risk at a risk-exposed individual 91, 92, 93, ..., a loss 917, 927, 937 of the concerned risk-exposed individual 91, 92, 39, ... is distinctively covered by the resource pooling systems 20/30 by triggering the specific transfer of resources from the resource pooling system 20/30 to the affected risk-exposed individual 91, 92, 93, ...

The operation of the system 1 will be described in detail below. The first and second risk transfer parameters 211, 212, 213/311, 312, 313, can for example comprise parameters defining physical measuring parameters to detect the occurrence of a risk event at the risk-exposed individual 91, 92, 93, by means of the system 1 and/or time- or amount-related threshold values. The risk-exposed individuals 91, 92, 93, .... can be any type of person associated with a life risk 9. A life risk is related to the probability for the occurrence of a life risk event in relation to risk-exposed individuals 91, 92, 93. The automated mortality classification system 1 includes at least a processor and associated memory modules. The operation of the system 1 is dynamically controlled, monitored and steered by the control module 7 with the associated machine learning-based pattern recognition module 8, in particular generating appropriate signaling and steering the activation and interworking of the various components of the automated mortality classification, signaling and underwriting system 1. The automated mortality classification system 1 can also include one or more display units and operating elements, such as a keyboard, and/or graphic pointing or position capturing devices, such as a computer mouse. The system 1 is a technical device comprising electronic means that can be used in the field of automated risk transfer or insurance technology with regard to risk transfers that are related to life risks 9. The invention seeks to technically capture, manage and automate complex related operations of monitoring and automated underwriting devices in the insurance industry. Another aspect involves synchronizing and adjusting such operations based on the proposed technical means. In contrast to standard approaches, the resource pooling system also achieves reproducible operations and reproducible risk assessment with the desired technical, repetitious accuracy, because it relies completely on technical means, process flow and process control/operation. The automated mortality classification and underwriting system 1 provides a scenario-based, life-risk measurement and determination of the risk exposure of risk-exposed individuals 91, 92, 93, ... or of an insurance portfolio containing a plurality of risk-exposed individuals 91, 92, 93, ... by means of the weighted accumulation of the various exposures associated with the corresponding risk classes 101, 102, 103 and risk class criteria 110, 111, 112. For the risk assessment, a distinct channel-based operation structure 81, 82, 83 is applied using appropriate life risk segmentation for smoking and non-smoking risk-exposed individuals 91, 92, 93. The total or maximum exposure 9 is derived by summing up the different exposures 913, 923, 933 per risk class over all accumulated classes, or contracts/treaty contracts in a portfolio.

The distinct channel-based automated mortality classification system 1 for automated real-time risk assessment, real-time underwriting and dynamic adjustment of life risks 9 captures life risks 9 associated with a plurality of risk-exposed individuals 91, 92, 93, which risks are at least partially transferable from a risk-exposed individual 91, 92, 93 to a first insurance system 2 and/or from the first insurance system 2 to an associated second insurance system 3. The risks associated with a plurality of risk-exposed individuals 91, 92, 93 can for example be at least partially transferable on an optional basis by means of the automated mortality classification system 1 from a risk-exposed individual 91, 92, 93 to a first insurance system 2 and/or from the first insurance system 2 to an associated second insurance system 3. In other words, the risk transfer can be accepted or declined autonomously by the automated mortality classification and underwriting system 1, thus allowing an autonomous operation of system 1. The risks 9 associated with the plurality of risk-exposed individuals 91, 92, 93 can for example be at least partially transferable from a risk-exposed individual 91, 92, 93 to a first insurance system 2 and/or from the first insurance system 2 to an associated second insurance system 30 by means of the automated mortality classification system 1, wherein an appropriate activation signaling is generated by the automated mortality classification and underwriting system 1 and transmitted to the first insurance system 2 and/or to the associated second insurance system 3 in order to activate and/or execute the risk transfer. To conduct the automated risk transfer, first and/or second risk transfer parameters 211, 212, 213/311, 312, 313 and the first and/or second payment transfer parameters 221, 222, 223/321, 322, 323 dynamically balance the risk-transfer with the pooled resources.

The system 1 comprises a table 10 with retrievable stored risk classes 101, 102, 103 each comprising assigned risk class criteria 110, 111, 112. Each of the risk classes 101, 102, 103 of the table 10 with retrievable stored risk classes 101, 102, 103 can for example be associated with at least one financial product accessible in a dedicated data store. The system 1 determines, for each of the risk classes 101, 102, 103, an expected occurrence rate, wherein the system 1 divides the expected occurrence rates by an average rate and determines a relative risk ratio as relative mortality factor for each of the risk classes 101, 102, 103 based on the data relating to the criteria 110, 111, 112 associated with said risk classes 101, 102, 103. The system 1 can generate correlated risk ratios between at least two of the risk classes 101, 102, 103 that are identified in said step for identifying and determining a dependence between the at least two different risk classes 101, 102, 103. The system 1 can for example compare the relative risk ratios and the correlated risk ratios with empirical data and generate comparative risk data to characterize the relative risks associated with the plurality of products, wherein the system 1 corrects the relative risk ratios if the comparative risk data is outside a defined range compared with the empirical data. In this case, the system 1 can for example comprise a data interface 11 for outputting or transmitting the corrected risk ratios. Thus, certain embodiment features of the present invention are directed to assessing relative risks, such as mortality risks, for a plurality of financial products, such as insurance products. This can comprise the steps of (i) identifying one or more risk classes 101, 102, 103 associated with the plurality of products, (ii) determining an expected occurrence rate for each of the risk classes 101, 102, 103, (iii) dividing the expected rates by an average rate for standard risks to determine a relative risk ratio for each of the risk classes 101, 102, 103, and (iv) comparing the relative risk ratios to characterize the relative risks associated with the plurality of products. Finally, concerning the criteria, the automated mortality classification system 1 can for example comprise means to automatically negotiate the risk class criteria 110, 111, 112 between the first insurance system 2 and second insurance system 3. This allows a further level of automation of the overall operation of the system.

The individual-specific parameters 911, 921, 931 of the risk-exposed individuals 91, 92, 93 are captured relating to criteria 110, 111, 112 of the stored risk classes 101, 102, 103 by means of the system 1 and/or capturing or measuring devices 914, 924, 934, and stored in a storage or repository unit 6. A specific risk class 101, 102, 103 associated with the life risks 9 of the exposed individual 91, 92, 93 is identified and selected from said stored risk classes 101, 102, 103 via the system 1 based on the captured parameters 911, 921, 931. In summary, the automated, real-time mortality classification and signaling system 1 assesses and adjusts life risks 9 in real-time, and provides an automated, dynamically adaptable underwriting based on the automated selective multi-level triage process 81, 82, 83. The risks 913, 923, 933 associated with the plurality of risk-exposed individuals 91, 92, 93 are thereby at least partially transferable from a risk-exposed individual 91, 92, 93 to the first insurance system 2 and/or from the first insurance system 2 to the associated second insurance system 3.

Individual-specific parameters 911, 921, 931 of the risk-exposed individuals 91, 92, 93 comprise at least individual-specific parameters 916, 926, 936 indicating captured self-declarations of smoking or non-smoking by the risk-exposed individuals 91, 92, 93. Upon triggering the individual-specific parameters 916, 926, 936 by means of a first trigger circuit 711 of a trigger module 71 indicating a captured self-declaration of smoking 8111, 8112, 8113 of a risk-exposed individual 91, 92, 93 via first trigger parameters 7111, 7112, 7113, the risk-exposed individual 91, 92, 93 is automatically assigned to a first triage channel 81 by means of the automated triage process. Upon triggering individual-specific parameters 916, 926, 936 by means of a second trigger circuit 712 of a trigger module 71 indicating a captured self-declaration of non-smoking of risk-exposed individuals 91, 92, 93 by means of second trigger parameters 7121, 7122, 7123, the triggered individual-specific parameters 911, 921, 931 are processed by a machine learning-based pattern recognition module 8 automatically assigning risk-exposed individuals 91, 92, 93 with detected non-smoking patterns 8211, 8212, 8213 to a second triage channel 82 as predicted non-smokers, and automatically assigning risk-exposed individuals 91, 92, 93 with detected smoking patterns 8311, 8312, 8313 to a third triage channel 83 as predicted smokers.

The system 1, in particular the machine-learning based pattern-recognition module 8, does not need to have lab-data of actual smoking-related measuring parameters, as input. For detecting and triaging non-smoking patterns 8211, 8212, 8213 and smoking patterns 8311, 8312, 8313 based on not smoking related data, the system only requires to capture data provided by the risk exposed individual 91, 92, 93 or the respective applicant in a normal risk-transfer or insurance application, as done by the normal prior art risk-transfer systems. The operational requirements of the system 1 are already meet, if the captured input data are primarily about the risk exposed individual 91, 92, 93 including e.g. demographic data, risky avocation participation, risk-transfer benefits requested, employment-related information, previous tobacco usage, applicant's medical condition as well as family history of various impairments. Additionally, based on the residence location of the applicant such as zip code, data is searched for in various open data sources to get a bigger picture of the community the applicant resides in. On the example of the United States, the zip code-level information includes number of households, median income, distribution of the resident population by education level, distribution of the employment statistics in various types of employment, distribution of the resident population by the average number of children in the household, etc. Furthermore, this extended data set can be supplemented by data from third-party providers or accessible databases providing applicant-level information on motor vehicle violations records, results from previous lab tests, and any prescription history. All these data elements are used to build and test a classification model to predict the risk exposed individual 91, 92, 93's propensity for smoking and non-smoking by means of the machine-learning based pattern-recognition module 8.

The predictive model as generated and tested the machine-learning based pattern-recognition module 8 usually does make errors in predicting non-smokers when applied to applications unseen by the algorithm. The selection of the performance metric for prediction model is based on (1) cost-asymmetry between type-1 (false positives) and type-2 (false negatives) prediction errors, and (2) the distribution of non-smokers to smokers in the applicant population, which is, for example, roughly 85% non-smokers to 15% smokers in the United States. Any type-1 errors when predicting non-smokers will allow smokers to get non-smoker rates and incurring higher mortality costs. Additionally, the skewed distribution of more non-smokers to smokers in the population sets a higher bar for prediction accuracy - one could classify all applicants as non-smokers and still achieve 85% accuracy, 85% precision, and 100% recall. Any prediction model will have to perform much better than this baseline number.

The technical and object approach of the inventive system 1 is to handling prediction errors is to understand their cost-benefit structure of having a systems and process that allows majority of the risk exposed individual 91, 92, 93 to generate operational quote parameters without having to subject the risk exposed individual 91, 92, 93 to invasive lab tests while allowing for a certain miss-classification instances. By understanding the cost-benefit analysis, the system 1 can e.g. be limited to offer straight-through application processing only to a subset of the applicants based on age, gender, coverage term, and face-amounts thereby improving the possibility of accruing a positive net present value (NPV) for the risk-transfer, and allowing a stable automated and autonomous operation of the system 1. Thus the combination of the three elements: predictive analytics and triage based risk exposed individual 91, 92, 93 classifications into smokers and non-smokers pattern, offering straight-through application processing to non-smokers, and identifying the parameters of the product offering including age, gender, and face amount restrictions which nets positive NPV is the essence of the core operation of the system 1.

The machine learning-based pattern recognition module 8 is based on random forest processing as an ensemble learning structure for classification, regression and prediction, wherein the pattern recognition module 8 operates by constructing a multitude of decision trees during training and outputting the class that is the mode of the classes or mean prediction as regression of the individual trees. This has the advantage, *inter alia,* that through the random forest processing, the random decision forests correct for decision trees' habit of overfitting to their training set. Through the selection of a random subset of features, it is possible to implement the "stochastic discrimination" approach to classification. Therefore, the use of the random forest processing has the advantage of applying a method that is resistant to overtraining according to the theory of stochastic discrimination. Furthermore, the random forest structure allows for ranking the importance of variables in the present classification and risk assessment problem in a natural way. Note that if the parameters contain groups of parameters of correlated features of similar relevance, then smaller groups are favored over larger groups. However, in the present invention, only a small number of input parameters are needed, thus avoiding the aforementioned problem. In the present application, Random Forest predictors naturally lead to a dissimilarity measure between the observations. The present system also makes it possible to define a Random Forest dissimilarity measure between the captured data. Consequently, the present system also makes it possible, via the used Random Forest predictor, to distinguish measured or captured real data from suitably generated synthetic data. The observed data are the captured unlabeled data, and the generated data are for example drawn from a reference distribution or simulated Monte Carlo distribution. The RF dissimilarity makes it possible to handle mixed variable types without problems, is invariant to monotonic transformations of the input variables, and is robust to outlying observations. The Random Forest dissimilarity also makes it easy to deal with a large number of semi-continuous variables due to its intrinsic variable selection, which is, for example, that it weighs the contribution of each variable according to how dependent it is on other variables. The application of Random Forest has the further advantage of producing the best results for the present invention.

As an alternative, the machine learning-based pattern recognition module 8 can be based on Gradient Boosting (GBM) as a machine learning structure for regression, classification and prediction, wherein the pattern recognition module 8 operates on a set, respectively ensemble of weak prediction structures using classifiers that are only slightly correlated with the true classification and optimization by means of an arbitrary differentiable loss function. This has the advantage, *inter alia,* that it provides a prediction model in the form of a set of weak prediction models, which can for example be chosen as decision trees. Thus, it allows building the models in a stage-wise fashion, thereby generalizing them by allowing optimization of an arbitrary differentiable loss function. The machine learning-based pattern recognition module 8 can also be based on support vector machines (SVM) as a machine learning structure for regression, classification and prediction, wherein for given sets of individual-specific parameters of the risk-exposed individuals, each is marked for one of two definable categories, and wherein the pattern recognition module builds a structure that, by assigning new sets into one category or the other, makes it a non-probabilistic binary linear classifier. This has the advantage, *inter alia,* of providing another technical structure for the machine learning-based pattern recognition module by means of a machine learning, support vector machine (SVMs, also support vector networks) allowing supervised use of learning patterns and models with controllable, associated learning algorithms in order to process the captured risk-related individual data for risk classification and assessment. However, if supervised learning of the machine learning-based pattern recognition module is not possible (e.g., due to absence of appropriate historical or simulated risk-related individual data related to their smoking and/or non-smoking behavior), the support vector machine structure has the advantage that it also allows unsupervised learning for the machine learning-based pattern recognition module 8, thereby finding natural clustering of the captured risk-related individual data to build up the first, second and third channel of the pattern recognition module. As underlying clustering algorithm to improve the support vector machine structure, support vector clustering can be applied for unlabeled risk-related individual data or to label the captured risk-related individual data by preprocessing the data for a classification pass. Finally, the machine learning-based pattern recognition module 8 can further be based on logistic regression as a machine learning structure for regression, classification and prediction, wherein the probability of a binary response is estimated based on one or more of the individual-specific parameters 911, 921, 931 as predictors. This has the advantage, *inter alia,* of providing another technical structure for the machine learning-based pattern recognition module 8, which is not a classification method as such, but much more based on a qualitative response or discrete choice data processing. As a further advantage, structuring the machine learning-based pattern recognition module 8 by means of logistic regression needs only a small number of assumptions in the present case, i.e., assuming a standard logistic distribution of errors. However, if the assumptions of linear discriminant analysis hold, i.e., if linear discriminant assumptions are true, the logistic regression assumptions must hold. Since the converse is not true, the logistic regression data processing needs fewer assumptions than other machine learning structures, such as discriminant data processing, and does not make assumptions on the distribution of the independent variables, which can advantageously be due to the unknown distribution of false declared non-smoking risk-exposed individuals within the true declared non-smoking risk-exposed individuals. It is important to note, that the machine-learning based pattern-recognition module 8 operating based on random forest processing, gradient boosting (GBM), support vector machines (SVM) and/or logistic regression as learning structure for classification, regression and prediction, giving just examples. Other machine-learning based learning structures or combinations of machine-learning based learning structures are also imaginable, based on which the pattern-recognition module 8 is operated. The choice of the machine-learning based learning structure of the pattern-recognition module 8 can also depend on the risk-transfer to be performed by the system 1. Explicitly, the operation of the system 1, i.e. the inventive system 1 itself, is not restricted to risk-transfer related to life- or health-risks. The present inventive risk-transfer system 1 can also be applied to risk-transfers related to occurring property or casualty risks, wherein the machine-learning based pattern-recognition module 8 is directed to other parameters, as the validity of input data in the context of smoking/non-smoking patterns of the risk exposed individuals 91, 92, 93.

The system 1 operates on an ongoing validation process that diverts, in the above described manner, a percentage of predicted non-smokers for lab testing in order to collect results about the risk-exposed individual's actual smoking or nonsmoking habit and compare them against predicted smoking or non-smoking habit and re-learn the predictive model if comparison indicates high error rates. These ongoing validation process allows for providing a self-adapting system 1, which is, in its operation, not comparable to a prior art system.

For detected risk-exposed individual 91, 92, 93 of the third triage channel 83, the system 1 measures and captures laboratory-scaled individual-specific parameters 915, 925, 935 via the automated laboratory unit 5, wherein the laboratory-scaled individual-specific parameters 915, 925, 935 are measured by means of laboratory measuring devices 914, 924, 934 of the automated laboratory unit 5, and the laboratory-scaled individual-specific parameters 915, 925, 935 are triggered for measured smoking and not-measured smoking, thereby verifying the declared non-smoking status of the risk-exposed individuals 91, 92, 93 assigned to the third channel 83. For the real-time risk assessment, a relative mortality factor 918, 928, 938 is measured based on the captured risk-related individual data 911, 921, 931 and/or the measured smoking or non-smoking parameter corresponding to the assigned channel 81, ..., 83, wherein based on the real-time risk assessment by means of the measured relative mortality factor 918, 928, 938, the risk associated with the risk-exposed individual 91, 92, 93 is transferable from the risk-exposed individual 91, 92, 93 to a first insurance system 2 and/or from the first insurance system 2 to the associated second insurance system 3, by means of automated generated first and/or second risk transfer parameters 211, 212, 213/311, 312, 313 and automated generated first and/or second payment parameters 221, 222, 223/321, 322, 323 and/or accordingly generated underwriting parameters. The dynamically generated underwriting parameters are transferable to the risk-exposed individual 91, 92, 93 for confirmation.

To assign the risk classes 101, 102, 103 of the table 10 to a risk-exposed individual 91, 92, 93 of the channels 81, 82, 83, to each of the risk classes 101, 102, 103 of the table 10 with retrievable stored risk classes 101, 102, 103, a tolerance factor can be determined and assigned to the corresponding risk class 101, 102, 103. If the captured parameters 911, 921, 931 of a risk-exposed individual 91, 92, 93 fail to be matched to the criteria 110, 111, 112 for one of the retrievable stored risk classes 101, 102, 103 by means of the system 1, a relative mortality factor of the individual 91, 92, 93 of the parameters 911, 921, 931 can be generated and compared to an average mortality of the closest matched class. Based on the assigned tolerance factor of the direct or closest matched class 101, 102, 103, the system 1 indicates whether to accept or reject a possible risk-transfer for the individual 91, 92, 93 for the direct or closest matched class 101, 102, 103 and generates the appropriate first and/or second risk transfer parameters 211, 212, 213/311, 312, 313 and second payment parameters 221, 222, 223/321, 322, 323 and/or corresponding underwriting parameters.

As mentioned, the system 1 further comprises a trigger module 71 with the first and second trigger circuit 711, 712. The trigger module 71 can be connected to the risk components 91, 92, 93, ... by means of capturing devices 914, 924, 934 in order to detect and capture measuring values for the captured parameters 911, 921, 931 related to the occurrence of life risk events within the data pathway associated with a risk-exposed individual 91, 92, 93, .... The data flow pathway can for example be monitored by the system 1, capturing individual-related measuring parameters at least periodically and/or within predefined time periods. The data flow pathway can, for example, also be dynamically monitored by the automated mortality classification system 1 and/or one of the insurance systems 2/3, by triggering individual measuring parameters of the data flow pathway transmitted from associated measuring systems and adapting the operational parameters, i.e., first and/or second risk transfer parameters 211, 212, 213/311, 312, 313 and second payment parameters 221, 222, 223/321, 322, 323 and/or corresponding underwriting parameters via the system 1. By triggering the data flow pathway, which comprises dynamically recorded measuring of the parameters of the concerned risk-exposed individuals 91, 92, 93, the system 1 is also able to detect the occurrence of a life risk event and dynamically monitor the different stages throughout the occurrence of the life risk event in order to provide appropriately adapted and gradated risk protection for a concerned risk-exposed individual 91, 92, 93, Such a risk protection structure can be based on payments received and stored from the related risk-exposed individual 91, 92, 93, .... and/or related to the total risk 9 of the insurance system 2 or 3 based on the overall transferred life risks 9 of all pooled risk-exposed individuals 91, 92, 93.

In the first, second and third channel 81, 82, 83, the individual risks 912, 922, 932 are typically mortality risks, and more specifically mortality risks that can be classified by the given plurality of risk criteria 110, 111, 112, but at least on the smoking and non-smoking status of the risk-exposed individual 91, 92, 93, respectively. Thus, these channels 81, 82, 83 can be used to compare and evaluate risk classifications used by different insurance systems in connection with their respective products. Different criteria 110, 111, 112 are often used as operational parameters of different, automated insurance systems 2/3 in determining which risk classes are to be assigned. The embodiment illustrated in figure 1 also allows for comparison of insurance products, especially preferred risk-transfer products, notwithstanding the differences in the criteria used by different companies. However, most importantly, the risk assessment in the first, second and third channel 81, 82, 83 makes it possible to put the different systems on a mortality-consistent basis.

It is to be noted that as a part of putting the automated mortality classification system 1 into operation, the system 1 comprises capturing or determining the rate of occurrence of a criterion (or criteria) 110, 111, 112 among the risk-exposed individuals 91, 92, 93 (or more broadly, an insured population) to be captured by the system 1. This rate of occurrence is often referred to as prevalence. For example, if one of the criteria 110, 111, 112 is the smoking status, information relating to the prevalence of smoking status, which is in this case binary or can be associated with a certain amount of smoked cigarettes, i.e., a "level" of smoking, wherein the levels used as "cut-points" or limits in classifying an individual risk must be captured. To acquire the prevalence relating to the risk-exposed individuals 91, 92, 93, a large laboratory dataset of risk-exposed individuals 91, 92, 93 can be analyzed and filtered to select relevant prevalence information, as provided in the third channel 83 by the laboratory unit 5. The prevalence of criteria 110, 111, 112 is then determined within an insured cohort. A cohort is a risk classification 101, 102, 103, which represents a range of incremental probabilities of occurrence of a life risk event. Therefore, the operation is a determination of the rate of occurrence of the subject criteria 110, 111, 112 among the members of a particular risk classification 101, 102, 103. To exclude correlations that may exist among various criteria 110, 111, 112, i.e., a possible dependence between two or more of the preferred criteria 110, 111, 112, it may be reasonable to take appropriate steps in the operation of the automated mortality classification system 1. For the determination of prevalence for all combinations of correlated criteria 110, 111, 112, i.e., gender, age, smoking status, etc., a numerical representation of the prevalence within a population can for example be determined for each unique combination of criteria 110, 111, 112. If particular combinations of criteria 110, 111, 112 result in non-credible or aberrant results, adjustments must be made accordingly. From the representation, a probability of occurrence can be determined for each combination of criteria 110, 111, 112. The results of this determination can then be compared to the empirical data. If the prevalence of certain combinations varies with what can be analyzed from the empirical data, adjustments are made to match the empirical data. However, if this adjustment process results in anomalies, such anomalies can be detected and corrected by additional steps. When the prevalence results match the empirical evidence, the prevalence results are stored. The prevalence results for each combination of preferred criteria 110, 111, 112 are stored in the system 1 by issuance age, gender, smoking, status, duration, etc.

Another important process for the system 1 is the process for further characterizing risks in addition to the criteria 110, 111, 112 including the smoking status of the risk-exposed individual 91, 92, 93. This process can be performed before and/or contemporaneously to the operation of the automated mortality classification and underwriting system 1, allowing a dynamic adaption of the system 1. This process relates to relative mortality (i.e., rate of death among the classes 101, 102, 103 divided by standard mortality). In a first step, data can be captured from historical mortality data or other sources. This data includes data specific to each of the criteria 110, 111, 112 being considered by the automated mortality classification and underwriting system 1. In addition, other clinical/epidemiological data possibly available in connection with the criteria 110, 111, 112 can be analyzed. Based on the analysis, a relative mortality rate for each of the criteria 110, 111, 112 can be calculated. As in the case with prevalence data, correlations in mortality data among the various criteria 110, 111, 112 should also be considered by the system 1. Finally, relative mortality rates are determined for all combinations of correlated criteria 110, 111, 112. Following these operations, any anomalies in the data have to be identified and resolved. The relative mortality rates determined for the combinations are compared with empirical data or data from studies, e.g., clinical studies, to determine whether the rates match the empirical data. Again, if the determined rates do not match the empirical evidence, adjustments to the relative mortality rates must be made to match the empirical results by the system 1. Following possible adjustments, the data are checked or filtered for anomalies, and any anomalies that occur are detected and corrected. If the relative mortality data is consistent with the empirical data or the data from studies, the data are stored by the automated mortality classification and underwriting system 1. According to the prevalence, the relative mortality results are stored in the system 1 for each correlated combination by issuance age, gender, smoking status and duration, etc. Finally, based on the prevalence and relative mortality results for each correlated combination of criteria, a specific base criteria set 110, 111, 112 can be selected by the automated mortality classification system 1. The selection can by done by the system 1 autonomously and/or for example negotiated automatically between the first and second insurance system 2/3. Based on the base criteria 110, 111, 112, prevalence and relative mortality data can be extracted from the stored parameters for each of such criteria 110, 111, 112, and a relative risk ratio can be generated by the automated mortality classification system 1 for each risk class 101, 102, 103, for example by smoking status, age, gender and duration, etc. The generation for each risk class 101, 102, 103 is based on both prevalence and relative mortality data, as well as on the criteria 110, 111, 112 defining each risk class 101, 102, 103.

### List of reference numerals

1 Mortality classification system
2 First insurance system (primary insurance system)
   20 First electronically automated resource-pooling system
   21 Payment transfer modules
      211, 212, 213 First risk transfer parameters
      221, 222, 223 First payment parameters
   22 Secured data store
3 Second insurance system (reinsurance system)
   30 Second electronically automated resource-pooling system
   31 Payment transfer modules
      311, 312, 313 Second risk transfer parameters
      321, 322, 323 Second payment parameters
   32 Secured data store
4 Independent control unit
5 Laboratory Unit
6 Repository unit
7 Control circuit
   71 Trigger module
      711 First trigger circuit
         7111, 7112, 7113 First trigger parameters
      712 Second trigger circuit
         7121, 7122, 7123 Second trigger parameters
   72 Data store
      721, 722, 723 Defined risk events
8 Machine-learning based pattern-recognition module
   81 First channel
      811 Table with individuals with smoking self-declared parameters
      8111, 8112, 8113 Smoking self-declaration parameter
   82 Second channel
      821 Table with detected non-smoking pattern
      8211, 8212, 8213 Non-Smoking detection pattern
   83 Third channel
      831 Table with detected smoking pattern
      8311, 8312, 8313 Smoking detection pattern
9 Total risk exposure
   91, 92, 93 Risk exposed individuals
   911, 921, 931 Captured risk-related individual data
   912, 922, 932 Likelihood of risk exposure of the pooled risk exposed individuals
   913, 923, 933 Individual risk of a risk exposed individual
   914, 924, 934 Capturing or measuring devices
   915, 925, 935 Laboratory-confirmed individual-specific parameters
   916, 926, 936 Smoking self-declaration parameter
   917, 927, 937 Occurred losses at a risk exposed individual
   918, 928, 938 Relative mortality factor for a risk exposed individual
10 Table with retrievable stored risk classes with assigned risk class criteria
   101, 102, 103 Risk classes
   110, 111, 112 Risk class criteria assigned to risk classes
   121, 122, 123 Class category parameters
   131, 132, 133 Class category criteria
11 Data interface
12 Data transmission network

## Claims

1. An automated, real-time mortality classification and signaling system (1) with autonomous operation for real-time risk assessment, and adjustment based on an automated selective multi-level triage process (81, 82, 83) relying on electronic and technical means, process flow and process control/operation, wherein risks (913, 923, 933) associated with a plurality of risk-exposed individuals (91, 92, 93) are at least partially transferable from a risk-exposed individual (91, 92, 93) to a first electronically automated insurance system (2) and/or from the electronically automated first insurance system (2) to an associated second electronically automated insurance system (3), wherein a risk (913, 923, 933) is related to the probability for the occurrence of a life risk event in relation to a risk-exposed individual (91, 92, 93) based on defined physical measuring parameters to detect the occurrence of a risk event at the risk-exposed individual (91, 92, 93), wherein the system (1) comprises a table (10) with retrievable stored risk classes (101, 102, 103) each comprising assigned risk class criteria (110, 111, 112), wherein individual-specific parameters (911, 921, 931) of the risk-exposed individuals (91, 92, 93) are captured relating to criteria (110, 111, 112) of the stored risk classes (101, 102, 103) by means of the system (1) and stored to a repository unit (6) and wherein a specific risk class (101, 102, 103) associated with the risk (913, 923, 933) of the exposed individual (91, 92, 93) is identified out and selected from said stored risk classes (101, 102, 103) by means of the system (1) based on the captured parameters (911, 921, 931), **characterized**
**in that** the operation of the system (1) is dynamically controlled, monitored and steered by a control module (7) with an associated machine learning-based pattern recognition module 8), wherein individual-specific parameters (911, 921, 931) of the risk-exposed individuals (91, 92, 93) comprise at least individual-specific parameters (916, 926, 936) indicating captured self-declaration of smoking or non-smoking of the risk-exposed individuals (91, 92, 93) and medical condition data based on medical screening tests and family history data of impairments of the risk-exposed individuals (91, 92, 93) captured by capturing or measuring devices (914, 924, 934),
**in that** upon triggering (71/711) the individual-specific parameters (916, 926, 936) indicating a captured self-declaration of smoking (8111, 8112, 8113) of a risk-exposed individual (91, 92, 93) by means of first trigger parameters (7111, 7112, 7113), the risk-exposed individual (91, 92, 93) is automatically assigned to a first triage channel (81), and upon triggering (71/712) individual-specific parameters (916, 926, 936) indicating captured self-declaration of non-smoking of risk-exposed individuals (91, 92, 93) by means of second trigger parameters (7121, 7122, 7123), the triggered individual-specific parameters (911, 921, 931) are processed by the machine learning-based pattern recognition module (8) automatically assigning risk-exposed individuals (91, 92, 93) with detected non-smoking patterns (8211, 8212, 8213) to a second triage channel (82) as predicted non-smokers, and automatically assigning risk-exposed individuals (91, 92, 93) with detected smoking patterns (8311, 8312, 8313) to a third triage channel (83) as predicted smokers,
**in that** the machine learning-based pattern recognition module (8) is based on random forest processing as an ensemble learning structure for classification, regression and prediction or based on a Gradient Boosting Machine (GBM) as a machine learning structure for regression, classification and prediction or based on support vector machines (SVM) as a supervised machine learning structure for regression, classification and prediction or logistic regression as a machine learning structure for regression, classification and prediction, wherein the probability of a binary response is estimated based on one or more of the individual-specific parameters (911,921,931) as predictors, wherein the captured input parameter are non-actual-smoking related measuring parameters at least comprising demographic data and employment-related data and previous tobacco usage parameters and medical condition parameters, family history data and residence location linking the applicant to characteristics of the community the applicant resides in,
**in that** for detected risk-exposed individuals (91, 92, 93) in the third triage channel (83), the system (1) requests and captures laboratory-scaled individual-specific parameters (915, 925, 935), wherein the laboratory-scaled individual-specific parameters (915, 925, 935) are measured by means of laboratory measuring devices (914, 924, 934), and the laboratory-scaled individual-specific parameters (915, 925, 935) are triggered for measured smoking and not-measured smoking,
**in that** for the real-time risk assessment, a relative mortality factor (918, 928, 938) is measured based on the captured risk-related individual data (911, 921, 931) and the measured smoking or non-smoking parameter corresponding to the assigned channel (81,...,83), wherein the relative mortality factor (918, 928, 938) is measured based on the captured individual's specific parameter (911, 921, 931) assignable to corresponding risk class criteria (110, 111, 112) of the risk classes (101, 102, 103), wherein the risk class criteria (110, 111, 112) comprise at least a risk class criterion (101) indicating smoking or non-smoking, and wherein for risk-exposed individuals (91, 92, 93) in the first triage channel (81), the risk class criterion (101) indicating smoking or non-smoking is automatically set to smoking, for risk-exposed individuals (91, 92, 93) in the second triage channel (82) to non-smoking, and for risk-exposed individuals (91, 92, 93) in the third triage channel (83) according to the laboratory-scaled, measured smoking or non-smoking parameters (915, 925, 935),
**in that** based on the real-time risk assessment by means of the measured relative mortality factor (918, 928, 938), the risk associated with the risk-exposed individual (91, 92, 93) is transferable from the risk-exposed individual (91, 92, 93) to a first insurance system (2) and/or from the first insurance system (2) to the associated second insurance system (3),
**in that** for transferring a risk associated with the risk-exposed individual (91, 92, 93) from the risk-exposed individual (91, 92, 93) to a first insurance system (2) and/or from the first insurance system (2) to the associated second insurance system (3), an appropriate activation signaling is generated by the automated system (1) by means of the control circuit (7) and transmitted to the first insurance system (2) and/or to the associated second insurance system (3) and wherein the risk transfer is mutually synchronized between the first and second insurance system (2/3), and
**in that** the system (1) is operable in an ongoing validation process diverting a definable percentage of the risk exposed individuals (91, 92, 93) with detected non-smoking patterns (8211, 8212, 8213) to the third triage channel (83) requesting and capturing laboratory-scaled individual-specific parameters (915, 925, 935), and comparing the captured laboratory-scaled individual-specific parameters (915, 925, 935) against predicted smoking or non-smoking patterns and re-learn the machine-learning based pattern-recognition module (8) and predictive model if comparison indicates high error rates.

2. The system (1) according to claim 1, **characterized in that** the machine learning-based pattern recognition module (8) is based on random forest processing as an ensemble learning structure for classification, regression, and prediction, wherein the pattern recognition module (8) operates by constructing a multitude of decision trees during training and outputting the class that is the mode of the classes or mean prediction as regression of the individual trees.

3. The system (1) according to one of claims 1 or 2, **characterized in that** the machine learning-based pattern recognition module (8) is based on Gradient Boosting (GBM) as a machine learning structure for regression, classification and prediction, wherein the pattern recognition module (8) operates on a set or ensemble of weak prediction structures using classifiers which are only slightly correlated with the true classification and optimization by means of an arbitrary differentiable loss function.

4. The system (1) according to one of claims 1 to 3, **characterized in that** the machine learning-based pattern recognition module (8) is based on support vector machines (SVM) as a machine learning structure for regression, classification and prediction, wherein for given sets of individual-specific parameters (911, 921, 931) of the risk-exposed individuals (91, 92, 93), each is marked for one of two definable categories, and wherein the pattern recognition module (8) builds a structure by assigning new sets or ensembles into one category or the other, making it a non-probabilistic binary linear classifier.

5. The system (1) according to one of claims 1 to 3, **characterized in that** the machine learning-based pattern recognition module (8) is based on logistic regression as a machine learning structure for regression, classification, and prediction, wherein the probability of a binary response is estimated based on one or more of the individual-specific parameters (911, 921, 931) as predictors.

6. The system (1) according to one of claims 1 to 5, **characterized in that** the system (1) comprises one or more of the first risk transfer systems (2) to provide said first risk transfer based on first risk transfer parameters (211, 212, 213) from at least some of the risk-exposed individuals (91, 92, 93) to the first risk transfer system (2), wherein the first risk transfer system (2) comprises a plurality of payment transfer modules (22) configured to receive and store (23) first payment parameters (221, 222, 223) associated with risk transfer of risk exposures (9) of said risk-exposed individuals (91, 92, 93) for pooling of their risks (913, 923, 933).

7. The system (1) according to claim 6, **characterized in that** via the machine learning-based control circuit (7) of the system (1), risk-related data (911, 921, 931) captured from the risk-exposed individuals (91, 92, 93) are processed, wherein said first risk transfer parameters (211, 212, 213) and correlated first payment transfer parameters (221, 222, 223) are generated by means of the machine learning-based control circuit (7) and transmitted to the first risk-transfer system (2), and wherein, in the case of triggering the occurrence of one of defined risk events (721, 722, 723) associated with transferred risk exposure (913, 923, 933) of the risk-exposed individuals (91, 92, 93), the occurred loss (917, 927, 937) is automatically covered by the first risk transfer system (2) based on the first risk transfer parameters (211, 212, 213) and correlated first payment transfer parameters (221, 222, 223).

8. The system (1) according to one of claims 1 to 7, **characterized in that** the system (1) comprises a second risk transfer system (3) to provide a second risk transfer based on second risk transfer parameters (311, 312, 313) from one or more of the first risk transfer systems (2) to the second risk transfer system (3), wherein the second risk transfer system (3) comprises second payment transfer modules (31) configured to receive and store (32) second payment parameters (321, 322, 323) for pooling of the risks (9) of the first risk transfer systems (2) associated with risk exposures transferred to the first risk transfer systems (2).

9. The system (1) according to claim 8, **characterized in that** the second risk transfer parameters (211, 212, 213) and correlated second payment transfer parameters (311, 312, 313) are generated by means of the machine learning-based control circuit (7) and transmitted to the second risk transfer system (3), wherein the occurred loss (917, 927, 937) is at least partly covered by the second insurance system (3) based on the second risk transfer parameters (311, 312, 313) and correlated second payment transfer parameters (321, 322, 323).

10. The system (1) according to one of claims 8 or 9, **characterized in that** the first and second risk transfer parameters (211, 212, 213/311, 312, 313) and the correlated first and second payment transfer parameters (221, 222, 223/321, 322, 323) are dynamically adapted and/or optimized by means of the machine learning-based control and signaling circuit (7) based on the captured risk-related individual data (911, 921, 931) and laboratory-confirmed individual-specific parameters (915, 925, 935) and the related assignment of the risk-exposed individuals (91, 92, 93) to the respective first, second or third channel (81/82/83), and based on the pooled risks (9) of the first risk transfer systems (2).

11. The system (1) according to one of claims 8 to 10, **characterized in that** the first and second risk transfer parameters (211, 212, 213/311, 312, 313) and the correlated first and second payment transfer parameters (221, 222, 223/321, 322, 323) are dynamically adapted and/or optimized by means of the machine learning-based control and signaling circuit (7), further based upon measuring the cost impact of prediction errors by misclassification of the risk-exposed individuals (91, 92, 93) (smokers as non-smokers) in comparison to savings from no lab testing for majority of applicants.

12. The system (1) according to one of claims 1 to 11, **characterized in that** by triggering predefined smoking or non-smoking detection pattern parameters (8211, 8212, 8213/8311, 8312, 8313) in the captured individual-specific data (911, 921, 931), additional individual-specific parameters are requested by the system (1) and transmitted to an independent control unit (4), wherein only upon capturing the transmission of a check back confirmation of the control unit (4), the automated mortality classification and underwriting system (1) accepts a possible risk transfer for the individual (91, 92, 93) for the classes (101, 102, 103) by transmitting appropriate accept or decline data.

13. The system (1) according to one of claims 1 to 12, **characterized in that** the risks associated with a plurality of risk-exposed individuals (91, 92, 93) are at least partially transferable on an optional basis by means of the automated mortality classification and underwriting system (1) from a risk-exposed individual (91, 92, 93) to a first insurance system (2) and/or from the first insurance system (2) to an associated second insurance system (3), if the exceedance of a predefined uncertainty threshold is detected based upon the detected non-smoking patterns (8211, 8212, 8213) and/or detected smoking patterns (8311, 8312, 8313).

14. The system (1) according to one of claims 1 to 13, **characterized in that** each of the risk classes (101, 102, 103) of the table (10) with retrievable stored risk classes (101, 102, 103) is associated with at least one financial product accessible in a dedicated data store, wherein the system (1) determines an expected occurrence rate for each of the risk classes (101, 102, 103), wherein the system (1) divides the expected occurrence rates by an average rate and determines a relative risk ratio as relative mortality factor (918, 928, 938) for each of the risk classes (101, 102, 103) based on the data relating to the criteria (110, 111, 112) associated with said risk classes (101, 102, 103), wherein the system (1) calculates correlated risk ratios between at least two of the risk classes (101, 102, 103) that are identified in said step of identifying and determining a dependence between the at least two different risk classes (101, 102, 103), wherein the system (1) compares the relative risk ratios and the correlated risk ratios with empirical data and generates comparative risk data to characterize the relative risks associated with the plurality of products, wherein the system (1) corrects the relative risk ratios if the comparative risk data is outside a defined range compared with the empirical data, and wherein the generated activation signaling is adapted based on the corrected risk ratios.

15. The system (1) according to claim 14, **characterized in that** for captured individual-specific parameters (911, 921, 931) of the risk-exposed individual (91, 92, 93) comprising at least age and gender and face amount as risk-related individual data (911, 921, 931), parameter requirements and/or ranges are generated via the system (1) for a client-specific life or financial product with a positive net present value (NPV) given by the measured sum of the present values (PV) of incoming payment transfers (221, 222, 223) to the first insurance system (2) and outgoing payment transfers covering the occurred loss (917, 927, 937) at a risk-exposed individual (91, 92, 93).

16. The system (1) according to one of claims 1 to 15, **characterized in that** the system (1) comprises means to automatically negotiate the risk class criteria (110, 111, 112) between the first insurance system (2) and second insurance system (3), wherein the generated activation signaling is adapted based on the negotiated risk class criteria (110, 111, 112).

17. The system (1) according to one of claims 1 to 16, **characterized in that** said one or more risk classes (101, 102, 103) are associated with one or more risk class criteria (110, 111, 112), and the system (1) further modifies one or more of said criteria (110, 111, 112) and re-determines the relative risk ratio, and determines an impact of said modification on the relative risks (918, 928, 938) associated with the products.

18. The system (1) according to one of claims 1 to 17, **characterized in that** one or more of said risk classes (101, 102, 103) are associated with different criteria (110, 111, 112), and the system (1) further compares the risk classes (101, 102, 103) based on said relative risk ratios.

19. The system (1) according to one of claims 1 to 18, **characterized in that** the system (1) further redefines one or more of said risk classes (101, 102, 103) based on the relative risk ratio.

20. The system (1) according to one of claims 1 to 19, **characterized in that** system (1) further determines a separate relative risk ratio for sub-groups of risks.

21. The system (1) according to one of claims 1 to 20, **characterized in that** the system (1) further compares the prevalence data to industry empirical data for particular combinations of risk class criteria (110, 111, 112), and adjusts the stored data to agree with the empirical data.

22. An automated, real-time mortality classification and signaling method for real-time risk assessment, adjustment and underwriting by means of an automated system (1) with autonomous operation based on an automated selective multi-level triage structure (81, 82, 83) relying on electronic and technical means, process flow and process control/operation, wherein risks (913, 923, 933) associated with a plurality of risk-exposed individuals (91, 92, 93) are at least partially transferable from a risk-exposed individual (91, 92, 93) to a first electronically automated insurance system (2) and/or from the electronically automated first insurance system (2) to an associated second electronically automated insurance system (3), wherein a risk (913, 923, 933) is related to the probability for the occurrence of a life risk event in relation to a risk-exposed individual (91, 92, 93) based on defined physical measuring parameters to detect the occurrence of a risk event at the risk-exposed individual (91, 92, 93), wherein the system (1) comprises a table (10) with retrievable stored risk classes (101, 102, 103) each comprising assigned risk class criteria (110, 111, 112), wherein individual-specific parameters (911, 921, 931) of the risk-exposed individuals (91, 92, 93) are captured relating to criteria (110, 111, 112) of the stored risk classes (101, 102, 103) by means of the system (1) and stored to a repository unit (6) and wherein a specific risk class (101, 102, 103) associated with the risk (913, 923, 933) of the exposed individual (91, 92, 93) is identified out and selected from said stored risk classes (101, 102, 103) by means of the system (1) based on the captured parameters (911, 921, 931), **characterized**
**in that** the operation of the system (1) is dynamically controlled, monitored and steered by a control module (7) with an associated machine learning-based pattern recognition module 8), wherein individual-specific parameters (911, 921, 931) of the risk-exposed individuals (91, 92, 93) comprise at least individual-specific parameters (916, 926, 936) indicating a captured self-declaration of smoking or non-smoking of the risk-exposed individuals (91, 92, 93) and medical condition data based on medical screening tests and family history data of impairments of the risk-exposed individuals (91, 92, 93) captured by capturing or measuring devices (914, 924, 934),
**in that** upon triggering (71/711) the individual-specific parameters (916, 926, 936) indicating a captured self-declaration of smoking (8111, 8112, 8113) of a risk-exposed individual (91, 92, 93) by means of first trigger parameters (7111, 7112, 7113), the risk-exposed individual (91, 92, 93) is automatically assigned to a first triage channel (81), and upon triggering (71/712) individual-specific parameters (916, 926, 936) indicating a captured self-declaration of non-smoking of risk-exposed individuals (91, 92, 93) by means of second trigger parameters (7121, 7122, 7123), the triggered individual-specific parameters (911, 921, 931) are processed by the machine learning-based pattern recognition module (8) automatically assigning risk-exposed individuals (91, 92, 93) with detected non-smoking patterns (8211, 8212, 8213) to a second triage channel (82) as predicted non-smokers, and automatically assigning risk-exposed individuals (91, 92, 93) with detected smoking patterns (8311, 8312, 8313) to a third triage channel (83) as predicted smokers,
**in that** the machine learning-based pattern recognition module (8) is based on random forest processing as an ensemble learning structure for classification, regression and prediction or based on a Gradient Boosting Machine (GBM) as a machine learning structure for regression, classification and prediction or based on support vector machines (SVM) as a supervised machine learning structure for regression, classification and prediction or logistic regression as a machine learning structure for regression, classification and prediction, wherein the probability of a binary response is estimated based on one or more of the individual-specific parameters (911,921,931) as predictors, wherein the captured input parameter are non-actual-smoking related measuring parameters at least comprising demographic data and employment-related data and previous tobacco usage parameters and medical condition parameters, family history data and residence location linking the applicant to characteristics of the community the applicant resides in,
**in that** for detected risk-exposed individuals (91, 92, 93) in the third triage channel (83), the system (1) requests and captures laboratory-scaled individual-specific parameters (915, 925, 935), wherein the laboratory-scaled individual-specific parameters (915, 925, 935) are measured by means of laboratory measuring devices (914, 924, 934), and the laboratory-scaled individual-specific parameters (915, 925, 935) are triggered for measured smoking and not-measured smoking,
**in that** for the real-time risk assessment, a relative mortality factor (918, 928, 938) is measured based on the captured risk-related individual data (911, 921, 931) and the measured smoking or non-smoking parameter corresponding to the assigned channel (81, ..., 83), wherein the relative mortality factor (918, 928, 938) is measured based on the captured individual's specific parameter (911, 921, 931) assignable to corresponding risk class criteria (110, 111, 112) of the risk classes (101, 102, 103), wherein the risk class criteria (110, 111, 112) comprise at least a risk class criterion (101) indicating smoking or non-smoking, and wherein for risk-exposed individuals (91, 92, 93) in the first triage channel (81), the risk class criterion (101) indicating smoking or non-smoking is automatically set to smoking, for risk-exposed individuals (91, 92, 93) in the second triage channel (82) to non-smoking, and for risk-exposed individuals (91, 92, 93) in the third triage channel (23) according to the laboratory-scaled, measured smoking or non-smoking parameters (915, 925, 935),
**in that** based on the real-time risk assessment by means of the measured relative mortality factor (918, 928, 938), the risk associated with the risk-exposed individual (91, 92, 93) is transferable from the risk-exposed individual (91, 92, 93) to a first insurance system (2) and/or from the first insurance system (2) to the associated second insurance system (3),
**in that** for transferring a risk associated with the risk-exposed individual (91, 92, 93) from the risk-exposed individual (91, 92, 93) to a first insurance system (2) and/or from the first insurance system (2) to the associated second insurance system (3), an appropriate activation signaling is generated by the automated system (1) by means of the control circuit (7) and transmitted to the first insurance system (2) and/or to the associated second insurance system (3) and wherein the risk transfer is mutually synchronized between the first and second insurance system (2/3), and
**in that** the system (1) is operable in an ongoing validation process diverting a definable percentage of the risk exposed individuals (91, 92, 93) with detected non-smoking patterns (8211, 8212, 8213) to the third triage channel (83) requesting and capturing laboratory-scaled individual-specific parameters (915, 925, 935), and comparing the captured laboratory-scaled individual-specific parameters (915, 925, 935) against predicted smoking or non-smoking patterns and re-learn the machine-learning based pattern-recognition module (8) and predictive model if comparison indicates high error rates.

23. The method according to claim 22, **characterized in that** the machine learning-based pattern recognition module (8) is based on random forest processing as an ensemble learning structure for classification, regression, and prediction, wherein the pattern recognition module (8) operates by constructing a multitude of decision trees during training and outputting the class that is the mode of the classes or mean prediction as regression of the individual trees.

24. The method according to one of the claims 22 or 23, **characterized in that** the machine learning-based pattern recognition module (8) is based on Gradient Boosting (GBM) as a machine learning structure for regression, classification and prediction, wherein the pattern recognition module (8) operates on a set or ensemble of weak prediction structures using classifiers which are only slightly correlated with the true classification and optimization by means of an arbitrary differentiable loss function.

25. The method according to one of the claims 22 to 24, **characterized in that** the machine learning-based pattern recognition module (8) is based on support vector machines (SVM) as a machine learning structure for regression, classification and prediction, wherein for given sets of individual-specific parameters (911, 921, 931) of the risk-exposed individuals (91, 92, 93), each is marked for one of two definable categories, and wherein the pattern recognition module (8) builds a structure by assigning new sets or ensembles into one category or the other, making it a non-probabilistic binary linear classifier.

26. The method according to one of the claims 22 to 25, **characterized in that** the machine learning-based pattern recognition module (8) is based on logistic regression as a machine learning structure for regression, classification, and prediction, wherein the probability of a binary response is estimated based on one or more of the individual-specific parameters (911, 921, 931) as predictors.

27. The method according to one of the claims 22 to 26, **characterized in that** the system (1) comprises one or more of the first risk transfer systems (2) to provide said first risk transfer based on first risk transfer parameters (211, 212, 213) from at least some of the risk-exposed individuals (91, 92, 93) to the first risk transfer system (2), wherein the first risk transfer system (2) comprises a plurality of payment transfer modules (22) configured to receive and store (23) first payment parameters (221, 222, 223) associated with risk transfer of risk exposures (9) of said risk-exposed individuals (91, 92, 93) for pooling of their risks (913, 923, 933).

28. The method according to claim 27, **characterized in that** through the machine learning-based control circuit (7) of the system (1), risk-related data (911, 921, 931) captured from the risk-exposed individuals (91, 92, 93) are processed, wherein said first risk transfer parameters (211, 212, 213) and correlated first payment transfer parameters (221, 222, 223) are generated by means of the machine learning-based control circuit (7) and transmitted to the first risk transfer system (2), and wherein, in the case of triggering of the occurrence of one of defined risk events (721, 722, 723) associated with transferred risk exposure (913, 923, 933) of the risk-exposed individuals (91, 92, 93), the occurred loss (917, 927, 937) is automatically covered by the first risk transfer system (2) based on the first risk transfer parameters (211, 212, 213) and correlated first payment transfer parameters (221, 222, 223).

29. The method according to one of the claims 22 to 28, **characterized in that** the system (1) comprises a second risk transfer system (3) to provide a second risk transfer based on second risk transfer parameters (311, 312, 313) from one or more of the first risk transfer systems (2) to the second risk transfer system (3), wherein the second risk transfer system (3) comprises second payment transfer modules (31) configured to receive and store (32) second payment parameters (321, 322, 323) for pooling of the risks (9) of the first risk transfer systems (2) associated with risk exposures transferred to the first risk transfer systems (2).

30. The method according to claim 29, **characterized in that** the second risk transfer parameters (211, 212, 213) and correlated second payment transfer parameters (311, 312, 313) are generated by means of the machine learning-based control circuit (7) and transmitted to the second risk transfer system (3), wherein the occurred loss (917, 927, 937) is at least partly covered by the second insurance system (3) based on the second risk transfer parameters (311, 312, 313) and correlated second payment transfer parameters (321, 322, 323).

31. The method according to one of the claims 29 or 30, **characterized in that** the first and second risk transfer parameters (211, 212, 213/311, 312, 313) and the correlated first and second payment transfer parameters (221, 222, 223/321, 322, 323) are dynamically adapted and/or optimized by means of the machine learning-based control and signaling circuit (7) based on the captured risk-related individual data (911, 921, 931) and laboratory-confirmed individual-specific parameters (915, 925, 935), and the related assignment of the risk-exposed individuals (91, 92, 93) to the respective first, second or third channel (81/82/83), and based on the pooled risks (9) of the first risk transfer systems (2).

32. The method according to one of the claims 29 to 31, **characterized in that** the first and second risk transfer parameters (211, 212, 213/311, 312, 313) and the correlated first and second payment transfer parameters (221, 222, 223/321, 322, 323) are dynamically adapted and/or optimized by means of the machine learning-based control and signaling circuit (7), further based upon measuring the cost impact of prediction errors by misclassification of the risk-exposed individuals (91, 92, 93) (smokers as non-smokers) in comparison to savings from no lab testing for the majority of applicants.

33. The method according to one of the claims 22 to 32, **characterized in that** by triggering predefined smoking or non-smoking detection pattern parameters (8211, 8212, 8213/8311, 8312, 8313) in the captured individual-specific data (911, 921, 931), additional individual-specific parameters are requested by the system (1) and transmitted to an independent control unit (4), wherein only upon capturing the transmission of a check back confirmation of the control unit (4), the automated mortality classification and underwriting system (1) accepts a possible risk transfer for the individual (91, 92, 93) for the classes (101, 102, 103) by transmitting appropriate accept or decline data.

34. The method according to one of the claims 22 to 33, **characterized in that** the risks associated with a plurality of risk-exposed individuals (91, 92, 93) are at least partially transferable on an optional basis by means of the automated mortality classification and underwriting system (1) from a risk-exposed individual (91, 92, 93) to a first insurance system (2) and/or from the first insurance system (2) to an associated second insurance system (3), if the exceedance of a predefined uncertainty threshold is detected based upon the detected non-smoking patterns (8211, 8212, 8213) and/or detected smoking patterns (8311, 8312, 8313).

35. The method according to one of the claims 22 to 34, **characterized in that** each of the risk classes (101, 102, 103) of the table (10) with retrievable stored risk classes (101, 102, 103) is associated with at least one financial product accessible in a dedicated data store, wherein the system (1) determines an expected occurrence rate for each of the risk classes (101, 102, 103), wherein the system (1) divides the expected occurrence rates by an average rate and determines a relative risk ratio as relative mortality factor (918, 928, 938) for each of the risk classes (101, 102, 103) based on the data relating to the criteria (110, 111, 112) associated with said risk classes (101, 102, 103), wherein the system (1) calculates correlated risk ratios between at least two of the risk classes (101, 102, 103) that are identified in said step of identifying and determining a dependence between the at least two different risk classes (101, 102, 103), wherein the system (1) compares the relative risk ratios and the correlated risk ratios with empirical data and generates comparative risk data to characterize the relative risks associated with the plurality of products, wherein the system (1) corrects the relative risk ratios if the comparative risk data is outside a defined range compared with the empirical data, and wherein the generated activation signaling is adapted based on the corrected risk ratios.

36. The method according to claim 35, **characterized in that** for captured individual-specific parameters (911, 921, 931) of the risk-exposed individual (91, 92, 93) comprising at least age and gender and face amount as risk-related individual data (911, 921, 931), parameter requirements and/or ranges are generated via the system (1) for a for client-specific life or financial product with a positive net present value (NPV) given by the measured sum of the present values (PV) of incoming payment transfers (221, 222, 223) to the first insurance system (2) and outgoing payment transfers covering the occurred loss (917, 927, 937) at a risk-exposed individual (91, 92, 93).

37. The method according to one of the claims 22 to 36, **characterized in that** the system (1) comprises means to automatically negotiate the risk class criteria (110, 111, 112) between the first insurance system (2) and second insurance system (3), wherein the generated activation signaling is adapted based on the negotiated risk class criteria (110, 111, 112).

38. The method according to one of the claims 22 to 37, **characterized in that** said one or more risk classes (101, 102, 103) are associated with one or more risk class criteria (110, 111, 112), and the system (1) further modifies one or more of said criteria (110, 111, 112) and re-determines the relative risk ratio, and for determines an impact of said modification on the relative risks (918, 928, 938) associated with the products.

39. The method according to one of the claims 22 to 38, **characterized in that** one or more of said risk classes (101, 102, 103) are associated with different criteria (110, 111, 112), and the system (1) further compares the risk classes (101, 102, 103) based on said relative risk ratios.

40. The method according to one of the claims 22 to 39, **characterized in that** the system (1) further redefines one or more of said risk classes (101, 102, 103) based on the relative risk ratio.

41. The method according to claim 40, **characterized in that** the system (1) further determines a separate relative risk ratio for sub-groups of risks.

42. The method according to one of the claims 22 to 41 **characterized in that** the system (1) further compares the prevalence data to industry empirical data for particular combinations of risk class criteria (110, 111, 112), and adjusts the stored data to agree with the empirical data.

## Patentansprüche

1. Automatisiertes Echtzeit-Mortalitätsklassifizierungs- und Signalisierungssystem (1) mit autonomem Betrieb zur Echtzeit-Risikobewertung und -einstellung basierend auf einem automatisierten selektiven mehrstufigen Triageprozess (81, 82, 83), der sich auf elektronische und technische Mittel, Prozessabläufe sowie Prozesssteuerung/-betrieb stützt, wobei Risiken (913, 923, 933), die einer Vielzahl risikoexponierter Individuen (91, 92, 93) zugeordnet sind, zumindest teilweise von einem risikoexponierten Individuum (91, 92, 93) auf ein erstes elektronisch automatisiertes Versicherungssystem (2) und/oder von dem elektronisch automatisierten ersten Versicherungssystem (2) auf ein zugeordnetes zweites elektronisch automatisiertes Versicherungssystem (3) transferierbar sind,
wobei ein Risiko (913, 923, 933) mit der Wahrscheinlichkeit des Eintretens eines Lebensrisikoereignisses in Bezug auf ein risikoexponiertes Individuum (91, 92, 93) in Zusammenhang steht, basierend auf definierten physischen Messparametern zum Erfassen des Eintretens eines Risikoereignisses bei dem risikoexponierten Individuum (91, 92, 93), wobei das System (1) eine Tabelle (10) mit abrufbaren gespeicherten Risikoklassen (101, 102, 103) umfasst, die jeweils zugewiesene Risikoklassenkriterien (110, 111, 112) aufweisen, wobei individuumspezifische Parameter (911, 921, 931) der risikoexponierten Individuen (91, 92, 93) in Bezug auf Kriterien (110, 111, 112) der gespeicherten Risikoklassen (101, 102, 103) mittels des Systems (1) aufgenommen und in einer Repository-Einheit (6) gespeichert werden, und wobei eine spezifische Risikoklasse (101, 102, 103), die dem Risiko (913, 923, 933) des exponierten Individuums (91, 92, 93) zugeordnet ist, aus den gespeicherten Risikoklassen (101, 102, 103) mittels des Systems (1) basierend auf den aufgenommenen Parametern (911, 921, 931) identifiziert und ausgewählt wird,
**dadurch gekennzeichnet, dass** der Betrieb des Systems (1) dynamisch von einem Steuermodul (7) mit einem zugeordneten Machine-Learning-basierten Mustererkennungsmodul (8) gesteuert, überwacht und gelenkt wird, wobei individuumspezifische Parameter (911, 921, 931) der risikoexponierten Individuen (91, 92, 93) mindestens individuumspezifische Parameter (916, 926, 936) umfassen, die aufgenommene Selbsterklärung von Rauchen oder Nichtrauchen der risikoexponierten Individuen (91, 92, 93) und medizinische Zustandsdaten basierend auf medizinischen Screeningtests sowie familienanamnestische Daten zu Beeinträchtigungen der risikoexponierten Individuen (91, 92, 93), aufgenommen durch Aufnahme- oder Messvorrichtungen (914, 924, 934), angeben,
dass beim Triggern (71/711) der individuumspezifischen Parameter (916, 926, 936), die eine aufgenommene Selbsterklärung von Rauchen (8111, 8112, 8113) eines risikoexponierten Individuums (91, 92, 93) mittels erster Triggerparameter (7111, 7112, 7113) angeben, das risikoexponierte Individuum (91, 92, 93) automatisch einem ersten Triagekanal (81) zugewiesen wird, und beim Triggern (71/712) individuumspezifischer Parameter (916, 926, 936) die aufgenommene Selbsterklärung von Nichtrauchen risikoexponierter Individuen (91, 92, 93) mittels zweiter Triggerparameter (7121, 7122, 7123) angeben, die getriggerten individuumspezifischen Parameter (911, 921, 931) von dem Machine-Learning-basierten Mustererkennungsmodul (8) verarbeitet werden, das automatisch risikoexponierte Individuen (91, 92, 93) mit erfassten Nicht-Rauch-Mustern (8211, 8212, 8213) einem zweiten Triagekanal (82) als vorhergesagte Nichtraucher zuweist, und risikoexponierte Individuen (91, 92, 93) mit erfassten Rauch-Mustern (8311, 8312, 8313) einem dritten Triagekanal (83) als vorhergesagte Raucher zugewiesen werden,
dass das Machine-Learning-basierte Mustererkennungsmodul (8) auf Random-Forest-Verarbeitung als einer Ensemble-Lernstruktur zur Klassifizierung, Regression und Vorhersage basiert, oder auf einer Gradient Boosting Machine (GBM) als einer Machine-Learning-Struktur zur Regression, Klassifizierung und Vorhersage basiert, oder auf Support-Vector-Maschinen (SVM) als einer überwachten Machine-Learning-Struktur zur Regression, Klassifizierung und Vorhersage oder Logistikregression als einer Machine-Learning-Struktur zur Regression, Klassifizierung und Vorhersage basiert, wobei die Wahrscheinlichkeit einer binären Antwort basierend auf einem oder mehreren individuumspezifischen Parametern (911, 921, 931) als Prädiktoren geschätzt wird, wobei die aufgenommenen Eingabeparameter Messparameter für nicht-aktuelles Rauchen sind, die mindestens demographische Daten und beschäftigungsbezogene Daten und Parameter zur früheren Tabaknutzung und medizinische Zustandsparameter, familienanamnestische Daten und Wohnortlage umfassen, die den Antragsteller mit Merkmalen der Gemeinschaft, in der der Antragsteller wohnt, verbinden,
dass für erfasste risikoexponierte Individuen (91, 92, 93) in dem dritten Triagekanal (83) das System (1) individuumspezifische Labormaßstab-Parameter (915, 925, 935) anfordert und aufnimmt, wobei die individuumspezifischen Labormaßstab-Parameter (915, 925, 935) mittels Labormessvorrichtungen (914, 924, 934) gemessen werden, und die individuumspezifischen Labormaßstab-Parameter (915, 925, 935) für gemessenes Rauchen und nichtgemessenes Rauchen getriggert werden,
dass für die Echtzeit-Risikobeurteilung ein relativer Mortalitätsfaktor (918, 928, 938) basierend auf den aufgenommenen risikobezogenen Individuendaten (911, 921, 931) und dem gemessenen Rauch- oder Nicht-Rauch-Parameter, der dem zugewiesenen Kanal (81, ..., 83) entspricht, gemessen wird, wobei der relative Mortalitätsfaktor (918, 928, 938) basierend auf dem aufgenommenen spezifischen Parameter (911, 921, 931) des Individuums gemessen wird, der entsprechenden Risikoklassenkriterien (110, 111, 112) der Risikoklassen (101, 102, 103) zuweisbar ist, wobei die Risikoklassenkriterien (110, 111, 112) mindestens ein Risikoklassenkriterium (101) umfassen, das Rauchen oder Nichtrauchen angibt, und wobei für risikoexponierte Individuen (91, 92, 93) in dem ersten Triagekanal (81) das Risikoklassenkriterium (101), das Rauchen oder Nichtrauchen angibt, automatisch auf Rauchen gesetzt wird, für risikoexponierte Individuen (91, 92, 93) in dem zweiten Triagekanal (82) auf Nichtrauchen und für risikoexponierte Individuen (91, 92, 93) in dem dritten Triagekanal (83) gemäß den gemessenen Labormaßstab-Rauch- oder Nicht-Rauch-Parametern (915, 925, 935) gesetzt wird,
dass basierend auf der Echtzeit-Risikobeurteilung mittels des gemessenen relativen Mortalitätsfaktors (918, 928, 938) das Risiko, das dem risikoexponierten Individuum (91, 92, 93) zugeordnet ist, von dem risikoexponierten Individuum (91, 92, 93) auf ein erstes Versicherungssystem (2) und/oder von dem ersten Versicherungssystem (2) auf das zugeordnete zweite Versicherungssystem (3) transferiert wird,
dass zum Transferieren eines Risikos, das dem risikoexponierten Individuum (91, 92, 93) zugeordnet ist, von dem risikoexponierten Individuum (91, 92, 93) auf ein erstes Versicherungssystem (2) und/oder von dem ersten Versicherungssystem (2) auf das zugeordnete zweite Versicherungssystem (3) eine zweckmäßige Aktivierungssignalisierung von dem automatisierten System (1) mittels der Steuerschaltung (7) erzeugt und an das erste Versicherungssystem (2) und/oder das zugeordnete zweite Versicherungssystem (3) übertragen wird, und wobei der Risikotransfer gegenseitig zwischen dem ersten und dem zweiten Versicherungssystem (2/3) synchronisiert wird, und
dass das System (1) in einem laufenden Validierungsprozess betreibbar ist, der einen definierbaren Prozentsatz der risikoexponierten Individuen (91, 92, 93) mit erfassten Nicht-Rauch-Mustern (8211, 8212, 8213) zu dem dritten Triagekanal (83) umlenkt, der individuumspezifische Labormaßstab-Parameter (915, 925, 935) anfordert und aufnimmt und die aufgenommenen individuumspezifischen Labormaßstab-Parameter (915, 925, 935) mit vorhergesagten Rauch- oder Nicht-Rauch-Mustern vergleicht und das Machine-Learning-basierte Mustererkennungsmodul (8) und Vorhersagemodell erneut trainiert, wenn der Vergleich hohe Fehlerraten angibt.

2. System (1) nach Anspruch 1, **dadurch gekennzeichnet, dass** das Machine-Learning-basierte Mustererkennungsmodul (8) auf Random-Forest-Verarbeitung als einer Ensemble-Lernstruktur zur Klassifizierung, Regression und Vorhersage basiert, wobei das Mustererkennungsmodul (8) durch Konstruieren einer großen Menge von Entscheidungsbäumen während des Trainings arbeitet, und die Klasse ausgibt, die der Modus der Klassen oder die mittlere Vorhersage als Regression der einzelnen Bäume ist.

3. System (1) nach einem der Ansprüche 1 oder 2, **dadurch gekennzeichnet, dass** das Machine-Learning-basierte Mustererkennungsmodul (8) auf Gradient Boosting (GBM) als Machine-Learning-Struktur zur Regression, Klassifizierung und Vorhersage basiert, wobei das Mustererkennungsmodul (8) auf einem Satz oder einer Einheit schwacher Vorhersagestrukturen unter Verwendung von Klassifizierern, die nur leicht mit der tatsächlichen Klassifizierung und Optimierung korrelieren, mittels einer willkürlichen differenzierbaren Verlustfunktion arbeitet.

4. System (1) nach einem der Ansprüche 1 bis 3, **dadurch gekennzeichnet, dass** das Machine-Learning-basierte Mustererkennungsmodul (8) auf Support Vector Machines (SVM) als einer Machine-Learning-Struktur zur Regression, Klassifizierung und Vorhersage basiert, wobei für gegebene Sätze individuumspezifischer Parameter (911, 921, 931) der risikoexponierten Individuen (91, 92, 93) jeder für eine von zwei definierbaren Kategorien markiert ist, und wobei das Mustererkennungsmodul (8) eine Struktur durch Zuweisen neuer Sätze oder Einheiten zu einer Kategorie oder der anderen aufbaut, wodurch es sich um einen nichtprobabilistischen binären linearen Klassifizierer handelt.

5. System (1) nach einem der Ansprüche 1 bis 3, **dadurch gekennzeichnet, dass** das Machine-Learning-basierte Mustererkennungsmodul (8) auf Logistikregression als einer Machine-Learning-Struktur zur Regression, Klassifizierung und Vorhersage basiert, wobei die Wahrscheinlichkeit einer binären Antwort basierend auf einem oder mehreren der individuumspezifischen Parameter (911, 921, 931) als Prädiktoren geschätzt wird.

6. System (1) nach einem der Ansprüche 1 bis 5, **dadurch gekennzeichnet, dass** das System (1) eines oder mehrere der ersten Risikotransfersysteme (2) umfasst, um den ersten Risikotransfer basierend auf ersten Risikotransferparametern (211, 212, 213) von mindestens einigen der risikoexponierten Individuen (91, 92, 93) auf das erste Risikotransfersystem (2) bereitzustellen, wobei das erste Risikotransfersystem (2) eine Vielzahl von Zahlungstransfermodulen (22) umfasst, die dazu konfiguriert sind, erste Zahlungsparameter (221, 222, 223) zu empfangen und zu speichern (23), die dem Risikotransfer von Risikoexpositionen (9) der risikoexponierten Individuen (91, 92, 93) zum Pooling ihrer Risiken (913, 923, 933) zugeordnet sind.

7. System (1) nach Anspruch 6, **dadurch gekennzeichnet, dass** über die Machine-Learning-basierte Steuerschaltung (7) des Systems (1) risikobezogene Daten (911, 921, 931), die von den risikoexponierten Individuen (91, 92, 93) aufgenommen werden, verarbeitet werden, wobei die ersten Risikotransferparameter (211, 212, 213) und korrelierte erste Zahlungstransferparameter (221, 222, 223) mittels der Machine-Learning-basierten Steuerschaltung (7) erzeugt und an das erste Risikotransfersystem (2) übertragen werden, und wobei in dem Fall des Triggerns des Eintretens eines von definierten Risikoereignissen (721, 722, 723), die der transferierten Risikoexposition (913, 923, 933) der risikoexponierten Individuen (91, 92, 93) zugeordnet sind, der aufgetretene Verlust (917, 927, 937) automatisch von dem ersten Risikotransfersystem (2) basierend auf den ersten Risikotransferparametern (211, 212, 213) und korrelierten ersten Zahlungstransferparametern (221, 222, 223) gedeckt wird.

8. System (1) nach einem der Ansprüche 1 bis 7, **dadurch gekennzeichnet, dass** das System (1) ein zweites Risikotransfersystem (3) umfasst, um einen zweiten Risikotransfer basierend auf zweiten Risikotransferparametern (311, 312, 313) von einem oder mehreren der ersten Risikotransfersysteme (2) auf das zweite Risikotransfersystem (3) bereitzustellen, wobei das zweite Risikotransfersystem (3) zweite Zahlungstransfermodule (31) umfasst, die dazu konfiguriert sind, zweite Zahlungsparameter (321, 322, 323) zum Pooling der Risiken (9) der ersten Risikotransfersysteme (2), die Risikoexpositionen zugeordnet sind, die auf die ersten Risikotransfersysteme (2) transferiert werden, zu empfangen und zu speichern (32).

9. System (1) nach Anspruch 8, **dadurch gekennzeichnet, dass** die zweiten Risikotransferparameter (211, 212, 213) und korrelierten zweiten Zahlungstransferparameter (311, 312, 313) mittels der Machine-Learning-basierten Steuerschaltung (7) erzeugt und an das zweite Risikotransfersystem (3) übertragen werden, wobei der aufgetretene Verlust (917, 927, 937) mindestens teilweise von dem zweiten Versicherungssystem (3) basierend auf den zweiten Risikotransferparametern (311, 312, 313) und korrelierten zweiten Zahlungstransferparametern (321, 322, 323) gedeckt wird.

10. System (1) nach einem der Ansprüche 8 oder 9, **dadurch gekennzeichnet, dass** die ersten und die zweiten Risikotransferparameter (211, 212, 213/311, 312, 313) und die korrelierten ersten und zweiten Zahlungstransferparameter (221, 222, 223/321, 322, 323) dynamisch mittels der Machine-Learning-basierten Steuer- und Signalisierungsschaltung (7) basierend auf den aufgenommenen risikobezogenen individuellen Daten (911, 921, 931) und laborbestätigten individuumspezifischen Parametern (915, 925, 935) sowie der dazu gehörenden Zuweisung der risikoexponierten Individuen (91, 92, 93) zu dem jeweiligen ersten, zweiten oder dritten Kanal (81/82/83) und basierend auf den gepoolten Risiken (9) der ersten Risikotransfersysteme (2) angepasst und/optimiert werden.

11. System (1) nach einem der Ansprüche 8 bis 10, **dadurch gekennzeichnet, dass** die ersten und zweiten Risikotransferparameter (211, 212, 213/311, 312, 313) und die korrelierten ersten und zweiten Zahlungstransferparameter (221, 222, 223/321, 322, 323) dynamisch mittels der Machine-Learning-basierten Steuer- und Signalisierungsschaltung (7) ferner basierend auf Messen der Kostenauswirkung von Vorhersagefehlern durch Fehlklassifizierung der risikoexponierten Individuen (91, 92, 93) (Raucher als Nichtraucher) im Vergleich zu Einsparungen durch Verzicht auf Labortesten für die Mehrzahl von Antragstellern angepasst und/optimiert werden.

12. System (1) nach einem der Ansprüche 1 bis 11, **dadurch gekennzeichnet, dass** durch Triggern vordefinierter Rauch- oder Nicht-Rauch-Erfassungsmusterparameter (8211, 8212, 8213/8311, 8312, 8313) in den aufgenommenen individuumspezifischen Daten (911, 921, 931) zusätzliche individuumspezifische Parameter von dem System (1) angefordert und an eine unabhängige Kontrolleinheit (4) übertragen werden, wobei nur bei Aufnehmen der Übertragung einer Rückbestätigung der Kontrolleinheit (4) das automatisierte Mortalitätsklassifizierungs- und Underwriting-System (1) einen möglichen Risikotransfer für das Individuum (91, 92, 93) für die Klassen (101, 102, 103) durch Übertragen entsprechender Annahme- oder Ablehnungsdaten akzeptiert.

13. System (1) nach einem der Ansprüche 1 bis 12, **dadurch gekennzeichnet, dass** die Risiken, die einer Vielzahl risikoexponierter Individuen (91, 92, 93) zugeordnet sind, mindestens teilweise auf einer optionalen Basis mittels des automatisierten Mortalitätsklassifizierungs- und Underwriting-Systems (1) von einem risikoexponierten Individuum (91, 92, 93) auf ein erstes Versicherungssystem (2) und/oder von dem ersten Versicherungssystem (2) auf ein zugeordnetes zweites Versicherungssystem (3) transferierbar sind, wenn die Überschreitung einer vorbestimmten Unsicherheitsschwelle basierend auf den erfassten Nicht-Rauch-Mustern (8211, 8212, 8213) und/oder erfassten Rauch-Mustern (8311, 8312, 8313) erfasst wird.

14. System (1) nach einem der Ansprüche 1 bis 13, **dadurch gekennzeichnet, dass** jede der Risikoklassen (101, 102, 103) der Tabelle (10) mit abrufbaren gespeicherten Risikoklassen (101, 102, 103) mindestens einem Finanzprodukt zugeordnet ist, das in einem dedizierten Datenspeicher zugänglich ist, wobei das System (1) eine erwartete Häufigkeitsrate für jede der Risikoklassen (101, 102, 103) bestimmt, wobei das System (1) die erwarteten Häufigkeitsraten durch eine Durchschnittsrate dividiert und ein relatives Risikoverhältnis als relativen Mortalitätsfaktor (918, 928, 938) für jede der Risikoklassen (101, 102, 103) basierend auf den Daten bezüglich der Kriterien (110, 111, 112) bestimmt, die den Risikoklassen (101, 102, 103) zugeordnet sind, wobei das System (1) korrelierte Risikoverhältnisse zwischen mindestens zwei der Risikoklassen (101, 102, 103) berechnet, die in dem Schritt des Identifizierens und Bestimmens einer Abhängigkeit zwischen den mindestens zwei unterschiedlichen Risikoklassen (101, 102, 103) identifiziert werden, wobei das System (1) die relativen Risikoverhältnisse und die korrelierten Risikoverhältnisse mit empirischen Daten vergleicht und Vergleichsrisikodaten erzeugt, um die relativen Risiken, die der Vielzahl von Produkten zugeordnet sind, zu charakterisieren, wobei das System (1) die relativen Risikoverhältnisse korrigiert, wenn die Vergleichsrisikodaten außerhalb eines definierten Bereichs im Vergleich zu den empirischen Daten liegen, und wobei die erzeugte Aktivierungssignalisierung basierend auf den korrigierten Risikoverhältnissen angepasst wird.

15. System (1) nach Anspruch 14, **dadurch gekennzeichnet, dass** für aufgenommene individuumspezifische Parameter (911, 921, 931) des risikoexponierten Individuums (91, 92, 93), die mindestens Alter und Geschlecht sowie Nennbetrag als risikobezogene Individuumdaten (911, 921, 931) umfassen, Parameteranforderungen und/oder -bereiche über das System (1) für ein kundenspezifisches Lebens- oder Finanzprodukt mit einem positiven Nettobarwert (NPV) erzeugt werden, der von der gemessenen Summe der Barwerte (PV) eingehender Zahlungtransfers (221, 222, 223) an das erste Versicherungssystem (2) und ausgehenden Zahlungstransfers, die den aufgetretenen Verlust (917, 927, 937) bei dem risikoexponierten Individuum (91, 92, 93) decken, gegeben wird.

16. System (1) nach einem der Ansprüche 1 bis 15, **dadurch gekennzeichnet, dass** das System (1) Mittel zum automatischen Aushandeln der Risikoklassenkriterien (110, 111, 112) zwischen dem ersten Versicherungssystem (2) und dem zweiten Versicherungssystem (3) umfasst, wobei die erzeugte Aktivierungssignalisierung basierend auf ausgehandelten Risikoklassenkriterien (110, 111, 112) angepasst wird.

17. System (1) nach einem der Ansprüche 1 bis 16, **dadurch gekennzeichnet, dass** die eine oder mehreren Risikoklassen (101, 102, 103) einem oder mehreren Risikoklassenkriterien (110, 111, 112) zugeordnet sind, und dass das System (1) ferner eines oder mehrere der Kriterien (110, 111, 112) modifiziert und das relative Risikoverhältnis neu bestimmt und eine Auswirkung der Modifikation auf die relativen Risiken (918, 928, 938), die den Produkten zugeordnet sind, bestimmt.

18. System (1) nach einem der Ansprüche 1 bis 17, **dadurch gekennzeichnet, dass** eine oder mehrere der Risikoklassen (101, 102, 103) unterschiedlichen Kriterien (110, 111, 112) zugeordnet sind, und dass das System (1) ferner die Risikoklassen (101, 102, 103) basierend auf den relativen Risikoverhältnissen vergleicht.

19. System (1) nach einem der Ansprüche 1 bis 18, **dadurch gekennzeichnet, dass** das System (1) ferner eine oder mehrere der Risikoklassen (101, 102, 103) basierend auf dem relativen Risikoverhältnis neu definiert.

20. System (1) nach einem der Ansprüche 1 bis 19, **dadurch gekennzeichnet, dass** das System (1) ferner ein separates relatives Risikoverhältnis für Teilgruppen von Risiken bestimmt.

21. System (1) nach einem der Ansprüche 1 bis 20, **dadurch gekennzeichnet, dass** das System (1) ferner die Prävalenzdaten mit empirischen Daten der Industrie für besondere Kombinationen von Risikoklassenkriterien (110, 111, 112) vergleicht und die gespeicherten Daten einstellt, damit sie mit den empirischen Daten übereinstimmen.

22. Automatisiertes Echtzeit-Mortalitätsklassifizierungs- und Signalisierungsverfahren zur Echtzeit-Risikobeurteilung, Einstellung und zum Underwriting mittels eines automatisierten Systems (1) mit autonomem Betrieb basierend auf einer automatisierten selektiven Multiebenen-Triagestruktur (81, 82, 83) gestützt auf elektronische und technische Mittel, Prozessablauf und Prozesssteuer-/betrieb, wobei Risiken (913, 923, 933), die einer Vielzahl risikoexponierter Individuen (91, 92, 93) zugeordnet sind, zumindest teilweise von einem risikoexponierten Individuum (91, 92, 93) auf ein erstes elektronisch automatisiertes Versicherungssystem (2) und/oder von dem elektronisch automatisierten ersten Versicherungssystem (2) auf ein zugeordnetes zweites elektronisch automatisiertes Versicherungssystem (3) transferierbar sind, wobei ein Risiko (913, 923, 933) mit der Wahrscheinlichkeit des Eintretens eines Lebensrisikoereignisses in Bezug auf ein risikoexponiertes Individuum (91, 92, 93) in Zusammenhang steht, basierend auf definierten physischen Messparametern zum Erfassen des Eintretens eines Risikoereignisses bei dem risikoexponierten Individuum (91, 92, 93), wobei das System (1) eine Tabelle (10) mit abrufbaren gespeicherten Risikoklassen (101, 102, 103) umfasst, die jeweils zugewiesene Risikoklassenkriterien (110, 111, 112) aufweisen, wobei individuumspezifische Parameter (911, 921, 931) der risikoexponierten Individuen (91, 92, 93) in Bezug auf Kriterien (110, 111, 112) der gespeicherten Risikoklassen (101, 102, 103) mittels des Systems (1) erfasst und in einer Repository-Einheit (6) aufgenommen werden, und wobei eine spezifische Risikoklasse (101, 102, 103), die dem Risiko (913, 923, 933) des exponierten Individuums (91, 92, 93) zugeordnet ist, aus den gespeicherten Risikoklassen (101, 102, 103) mittels des Systems (1) basierend auf den aufgenommenen Parametern (911, 921, 931) identifiziert und ausgewählt wird, **dadurch gekennzeichnet,**
**dass** der Betrieb des Systems (1) dynamisch von einem Steuermodul (7) mit einem zugeordneten Machine-Learning-basierten Mustererkennungsmodul (8) überwacht und gelenkt wird, wobei individuumspezifische Parameter (911, 921, 931) der risikoexponierten Individuen (91, 92, 93) mindestens individuumspezifische Parameter (916, 926, 936) umfassen, die eine aufgenommene Selbsterklärung von Rauchen oder Nichtrauchen der risikoexponierten Individuen (91, 92, 93) und medizinische Zustandsdaten basierend auf medizinischen Screeningtests und familienanamnestischen Daten zu Beeinträchtigungen der risikoexponierten Individuen (91, 92, 93), aufgenommen durch Aufnahme- oder Messvorrichtungen (914, 924, 934), angeben,
**dass** beim Triggern (71/711) der individuumspezifischen Parameter (916, 926, 936), die eine aufgenommene Selbsterklärung von Rauchen (8111, 8112, 8113) eines risikoexponierten Individuums (91, 92, 93) mittels erster Triggerparameter (7111, 7112, 7113) angeben, das risikoexponierte Individuum (91, 92, 93) automatisch einem ersten Triagekanal (81) zugewiesen wird, und beim Triggern (71/712) individuumspezifischer Parameter (916, 926, 936), die eine aufgenommene Selbsterklärung von Nichtrauchen risikoexponierter Individuen (91, 92, 93) angeben, mittels zweiter Triggerparameter (7121, 7122, 7123) die getriggerten individuumspezifischen Parameter (911, 921, 931) von dem Machine-Learning-basierten Mustererkennungsmodul (8) automatisch risikoexponierten Individuen (91, 92, 93) mit erfassten Nicht-Rauch-Mustern (8211, 8212, 8213) einem zweiten Triagekanal (82) als vorhergesagte Nichtraucher zugewiesen werden, und risikoexponierte Individuen (91, 92, 93) mit erfassten Rauch-Mustern (8311, 8312, 8313) einem dritten Triagekanal (83) als vorhergesagte Raucher zugeordnet werden,
**dass** das Machine-Learning-basierte Mustererkennungsmodul (8) auf Random-Forest-Verarbeitung als einer Ensemble-Lernstruktur zur Klassifizierung, Regression und Vorhersage basiert auf einer Gradient Boosting Machine (GBM) als einer Machine-Learning-Struktur zur Regression, Klassifizierung und Vorhersage basiert oder auf Support-Vector-Maschinen (SVM) oder als einer überwachten Machine-Learning-Struktur zur Regression, Klassifizierung und Vorhersage oder Regression basiert oder als einer Machine-Learning-Struktur zur Regression, Klassifizierung und Vorhersage basiert, wobei die Wahrscheinlichkeit einer binären Antwort basierend auf einem oder mehreren individuumspezifischen Parametern (911, 921, 931) als Prädiktoren geschätzt wird, wobei die aufgenommenen Eingabeparameter Messparameter für aktuelles Nichtrauchen sind, die mindestens demographische Daten und beschäftigungsbezogene Daten und Parameter zur früheren Tabaknutzung und medizinische Zustandsparameter, familienanamnestische Daten und Wohnortlage umfassen, die den Antragsteller mit Merkmalen der Gemeinschaft, in der der Antragsteller wohnt, verbinden,
**dass** für erfasste risikoexponierte Individuen (91, 92, 93) in dem dritten Triagekanal (83) das System (1) individuumspezifische Labormaßstab-Parameter (915, 925, 935) anfordert und aufnimmt, wobei die individuumspezifischen Labormaßstab-Parameter (915, 925, 935) mittels Labormessvorrichtungen (914, 924, 934) gemessen werden, und die individuumspezifischen Labormaßstab-Parameter (915, 925, 935) für gemessenes Rauchen und nichtgemessenes Rauchen getriggert werden, dass für die Echtzeit-Risikobeurteilung ein relativer Mortalitätsfaktor (918, 928, 938) basierend auf den aufgenommenen risikobezogenen Individuendaten (911, 921, 931) und dem gemessenen Rauch- oder Nicht-Rauch-Parameter, der dem zugewiesenen Kanal (81, ..., 83) entspricht, gemessen wird, wobei der relative Mortalitätsfaktor (918, 928, 938) basierend auf dem aufgenommenen spezifischen Parameter (911, 921, 931) des Individuums gemessen wird, der entsprechenden Risikoklassenkriterien (110, 111, 112) der Risikoklassen (101, 102, 103) zuweisbar ist, wobei die Risikoklassenkriterien (110, 111, 112) mindestens ein Risikoklassenkriterium (101) umfassen, das Rauchen oder Nichtrauchen angibt, und wobei für risikoexponierte Individuen (91, 92, 93) in dem ersten Triagekanal (81) das Risikoklassenkriterium (101), das Rauchen oder Nichtrauchen angibt, automatisch auf Rauchen gesetzt wird, und für risikoexponierte Individuen (91, 92, 93) in dem zweiten Triagekanal (82) auf Nichtrauchen und für risikoexponierte Individuen (91, 92, 93) in dem dritten Triagekanal (83) gemäß den gemessenen Labormaßstab-Rauch- oder Nicht-Rauch-Parametern (915, 925, 935),
**dass** basierend auf der Echtzeit-Risikobeurteilung mittels des gemessenen relativen Mortalitätsfaktors (918, 928, 938) das Risiko, das dem risikoexponierten Individuum (91, 92, 93) zugeordnet ist, von dem risikoexponierten Individuum (91, 92, 93) auf ein erstes Versicherungssystem (2) und/oder von dem ersten Versicherungssystem (2) auf das zugeordnete zweite Versicherungssystem (3) transferierbar ist,
**dass** zum Transferieren eines Risikos, das dem risikoexponierten Individuum (91, 92, 93) zugeordnet ist, von dem risikoexponierten Individuum (91, 92, 93) auf ein erstes Versicherungssystem (2) und/oder von dem ersten Versicherungssystem (2) auf das zugeordnete zweite Versicherungssystem (3) eine zweckmäßige Aktivierungssignalisierung von dem automatisierten System (1) mittels der Steuerschaltung (7) erzeugt und an das erste Versicherungssystem (2) und/oder das zugeordnete zweite Versicherungssystem (3) übertragen wird, und wobei der Risikotransfer gegenseitig zwischen dem ersten und dem zweiten Versicherungssystem (2/3) synchronisiert wird, und
**dass** das System (1) in einem laufenden Validierungsprozess betreibbar ist, der einen definierbaren Prozentsatz der risikoexponierten Individuen (91, 92, 93) mit erfassten Nicht-Rauch-Mustern (8211, 8212, 8213) zu dem dritten Triagekanal (83) umlenkt, der individuumspezifische Labormaßstab-Parameter (915, 925, 935) anfordert und aufnimmt und die aufgenommenen individuumspezifischen Labormaßstab-Parameter (915, 925, 935) mit vorhergesagten Rauch- oder Nicht-Rauch-Mustern vergleicht und das Machine-Learning-basierte Mustererkennungsmodul (8) und Vorhersagemodell erneut trainiert, wenn der Vergleich hohe Fehlerraten angibt.

23. Verfahren nach Anspruch 22, **dadurch gekennzeichnet, dass** das Machine-Learning-basierte Mustererkennungsmodul (8) auf Random-Forest-Verarbeitung als einer Ensemble-Lernstruktur zur Klassifizierung, Regression und Vorhersage basiert, wobei das Mustererkennungsmodul (8) durch Konstruieren einer großen Anzahl von Entscheidungsbäumen während des Trainings arbeitet, und die Klasse ausgibt, die der Modus der Klassen oder die mittlere Vorhersage als Regression der einzelnen Bäume ist.

24. Verfahren nach einem der Ansprüche 22 oder 23, **dadurch gekennzeichnet, dass** das Machine-Learning-basierte Mustererkennungsmodul (8) auf Gradient Boosting (GBM) als Machine-Learning-Struktur zur Regression, Klassifizierung und Vorhersage basiert, wobei das Mustererkennungsmodul (8) auf einem Satz oder einer Einheit schwacher Vorhersagestrukturen unter Verwendung von Klassifizierern, die nur leicht mit der tatsächlichen Klassifizierung und Optimierung korrelieren, mittels einer willkürlichen differenzierbaren Verlustfunktion arbeitet.

25. Verfahren nach einem der Ansprüche 22 bis 24, **dadurch gekennzeichnet, dass** das Machine-Learning-basierte Mustererkennungsmodul (8) auf Support-Vector-Maschinen (SVM) als einer Machine-Learning-Struktur zur Regression, Klassifizierung und Vorhersage basiert, wobei für gegebene Sätze individuumspezifischer Parameter (911, 921, 931) der risikoexponierten Individuen (91, 92, 93) jeder für eine von zwei definierbaren Kategorien markiert ist, und wobei das Mustererkennungsmodul (8) eine Struktur durch Zuweisen neuer Sätze oder Einheiten zu einer Kategorie oder der anderen aufbaut, wodurch es sich um einen nichtprobabilistischen binären linearen Klassifizierer handelt.

26. Verfahren nach einem der Ansprüche 22 bis 25, **dadurch gekennzeichnet, dass** das Machine-Learning-basierte Mustererkennungsmodul (8) auf Logistikregression als einer Machine-Learning-Struktur zur Regression, Klassifizierung und Vorhersage basiert, wobei die Wahrscheinlichkeit einer binären Antwort basierend auf einem oder mehreren der individuumspezifischen Parameter (911, 921, 931) als Prädiktoren geschätzt wird.

27. Verfahren nach einem der Ansprüche 22 bis 26, **dadurch gekennzeichnet, dass** das System (1) ein oder mehrere der ersten Risikotransfersysteme (2) umfasst, um den ersten Risikotransfer basierend auf ersten Risikotransferparametern (211, 212, 213) von mindestens einigen der risikoexponierten Individuen (91, 92, 93) dem ersten Risikotransfersystem (2) bereitzustellen, wobei das erste Risikotransfersystem (2) eine Vielzahl von Zahlungstransfermodulen (22) umfasst, die dazu konfiguriert sind, erste Zahlungsparameter (221, 222, 223), die dem Risikotransfer von Risikoexpositionen (9) der risikoexponierten Individuen (91, 92, 93) zum Pooling ihrer Risiken (913, 923, 933) zugeordnet sind, zu empfangen und zu speichern (23).

28. Verfahren nach Anspruch 27, **dadurch gekennzeichnet, dass** durch die Machine-Learning-basierte Steuerschaltung (7) des Systems (1) risikobezogene Daten (911, 921, 931), die von den risikoexponierten Individuen (91, 92, 93) aufgenommen werden, verarbeitet werden, wobei die ersten Risikotransferparameter (211, 212, 213) und korrelierten ersten Zahlungstransferparameter (221, 222, 223) mittels der Machine-Learning-basierten Steuerschaltung (7) erzeugt und an das erste Risikotransfersystem (2) übertragen werden, und wobei in dem Fall des Triggerns des Eintretens eines von definierten Risikoereignissen (721, 722, 723), die der transferierten Risikoexposition (913, 923, 933) der risikoexponierten Individuen (91, 92, 93) zugeordnet sind, der aufgetretene Verlust (917, 927, 937) automatisch von dem ersten Risikotransfersystem (2) basierend auf den ersten Risikotransferparametern (211, 212, 213) und korrelierten ersten Zahlungstransferparametern (221, 222, 223) gedeckt wird.

29. Verfahren nach einem der Ansprüche 22 bis 28, **dadurch gekennzeichnet, dass** das System (1) ein zweites Risikotransfersystem (3) umfasst, um einen zweiten Risikotransfer basierend auf zweiten Risikotransferparametern (311, 312, 313) von einem oder mehreren der ersten Risikotransfersysteme (2) auf das zweite Risikotransfersystem (3) bereitzustellen, wobei das zweite Risikotransfersystem (3) zweite Zahlungstransfermodule (31) umfasst, die dazu konfiguriert sind, zweite Zahlungsparameter (321, 322, 323) zum Pooling der Risiken (9) der ersten Risikotransfersysteme (2), die Risikoexpositionen zugeordnet sind, die an die ersten Risikotransfersysteme (2) transferiert werden, zu empfangen und zu speichern (32).

30. Verfahren nach Anspruch 29, **dadurch gekennzeichnet, dass** die zweiten Risikotransferparameter (211, 212, 213) und korrelierten zweiten Zahlungstransferparameter (311, 312, 313) mittels der Machine-Learning-basierten Steuerschaltung (7) erzeugt und an das zweite Risikotransfersystem (3) übertragen werden, wobei der eingetretene Verlust (917, 927, 937) mindestens teilweise durch das zweite Versicherungssystem (3) basierend auf den zweiten Risikotransferparametern (311, 312, 313) und korrelierten zweiten Zahlungstransferparametern (321, 322, 323) gedeckt wird.

31. Verfahren nach einem der Ansprüche 29 oder 30, **dadurch gekennzeichnet, dass** die ersten und zweiten Risikotransferparameter (211, 212, 213/311, 312, 313) und die korrelierten ersten und zweiten Zahlungstransferparameter (221, 222, 223/321, 322, 323) dynamisch mittels der Machine-Learning-basierten Steuer- und Signalisierungsschaltung (7) basierend auf den aufgenommenen risikobezogenen individuellen Daten (911, 921, 931) und laborbestätigten individuumspezifischen Parametern (915, 925, 935) sowie der dazu gehörenden Zuweisung der risikoexponierten Individuen (91, 92, 93) zu dem jeweiligen ersten, zweiten oder dritten Kanal (81/82/83) und basierend auf den gepoolten Risiken (9) der ersten Risikotransfersysteme (2) angepasst und/optimiert werden.

32. Verfahren nach einem der Ansprüche 29 bis 31, **dadurch gekennzeichnet, dass** die ersten und zweiten Risikotransferparameter (211, 212, 213/311, 312, 313) und die korrelierten ersten und zweiten Zahlungstransferparameter (221, 222, 223/321, 322, 323) dynamisch mittels der Machine-Learning-basierten Steuer- und Signalisierungsschaltung (7), ferner basierend auf Messen der Kostenauswirkung von Vorhersagefehlern durch Fehlklassifizierung der risikoexponierten Individuen (91, 92, 93) (Raucher als Nichtraucher) im Vergleich zu Einsparungen durch Verzicht auf Labortesten für den Großteil von Antragstellern angepasst und/oder optimiert werden.

33. Verfahren nach einem der Ansprüche 22 bis 32, **dadurch gekennzeichnet, dass** durch Triggern vordefinierter Rauch- oder Nicht-Rauch-Erfassungsmusterparameter (8211, 8212, 8213/8311, 8312, 8313) in den aufgenommenen individuumspezifischen Daten (911, 921, 931) zusätzliche individuumspezifische Parameter von dem System (1) angefordert und an eine unabhängige Kontrolleinheit (4) übertragen werden, wobei nur bei Aufnehmen der Übertragung einer Rückbestätigung der Kontrolleinheit (4) das automatisierte Mortalitätsklassifizierungs- und Underwriting-System (1) einen möglichen Risikotransfer für das Individuum (91, 92, 93) für die Klassen (101, 102, 103) durch Übertragen entsprechender Annahme- oder Ablehnungsdaten akzeptiert.

34. Verfahren nach einem der Ansprüche 22 bis 33, **dadurch gekennzeichnet, dass** die Risiken, die einer Vielzahl risikoexponierter Individuen (91, 92, 93) zugeordnet sind, mindestens teilweise auf einer optionalen Basis mittels des automatisierten Mortalitätsklassifizierungs- und Underwriting-Systems (1) von einem risikoexponierten Individuum (91, 92, 93) auf ein erstes Versicherungssystem (2) und/oder von dem ersten Versicherungssystem (2) auf ein zugeordnetes zweites Versicherungssystem (3) transferierbar sind, wenn die Überschreitung einer vorbestimmten Unsicherheitsschwelle basierend auf den erfassten Nicht-Rauch-Mustern (8211, 8212, 8213) und/oder erfassten Rauch-Mustern (8311, 8312, 8313) erfasst wird.

35. Verfahren nach einem der Ansprüche 22 bis 34, **dadurch gekennzeichnet, dass** jede der Risikoklassen (101, 102, 103) der Tabelle (10) mit abrufbaren gespeicherten Risikoklassen (101, 102, 103) mindestens einem Finanzprodukt zugeordnet ist, das in einem dedizierten Datenspeicher zugänglich ist, wobei das System (1) eine erwartete Häufigkeitsrate für jede der Risikoklassen (101, 102, 103) bestimmt, wobei das System (1) die erwarteten Häufigkeitsraten durch eine Durchschnittsrate dividiert und ein relatives Risikoverhältnis als relativen Mortalitätsfaktor (918, 928, 938) für jede der Risikoklassen (101, 102, 103) basierend auf den Daten bezüglich der Kriterien (110, 111, 112) bestimmt, die den Risikoklassen (101, 102, 103) zugeordnet sind, wobei das System (1) korrelierte Risikoverhältnisse zwischen mindestens zwei der Risikoklassen (101, 102, 103) berechnet, die in dem Schritt des Identifizierens und Bestimmens einer Abhängigkeit zwischen den mindestens zwei unterschiedlichen Risikoklassen (101, 102, 103) identifiziert werden, wobei das System (1) die relativen Risikoverhältnisse und die korrelierten Risikoverhältnisse mit empirischen Daten vergleicht und Vergleichsrisikodaten erzeugt, um die relativen Risiken, die der Vielzahl von Produkten zugeordnet sind, zu charakterisieren, wobei das System (1) die relativen Risikoverhältnisse korrigiert, wenn die Vergleichsrisikodaten außerhalb eines definierten Bereichs im Vergleich zu den empirischen Daten liegen, und wobei die erzeugte Aktivierungssignalisierung basierend auf den korrigierten Risikoverhältnissen angepasst wird.

36. Verfahren nach Anspruch 35, **dadurch gekennzeichnet, dass** für aufgenommene individuumspezifische Parameter (911, 921, 931) des risikoexponierten Individuums (91, 92, 93), die mindestens Alter und Geschlecht sowie Nennbetrag als risikobezogene Individuumdaten (911, 921, 931) umfassen, Parameteranforderungen und/oder -bereiche über das System (1) für ein kundenspezifisches Lebens- oder Finanzprodukt mit einem positiven Nettobarwert (NPV) erzeugt werden, der von der gemessenen Summe der Barwerte (PV) eingehender Zahlungtransfers (221, 222, 223) an das erste Versicherungssystem (2) und ausgehenden Zahlungstransfers, die den aufgetretenen Verlust (917, 927, 937) bei dem risikoexponierten Individuum (91, 92, 93) decken, gegeben wird.

37. Verfahren nach einem der Ansprüche 22 bis 36, **dadurch gekennzeichnet, dass** das System (1) Mittel zum automatischen Aushandeln der Risikoklassenkriterien (110, 111, 112) zwischen dem ersten Versicherungssystem (2) und dem zweiten Versicherungssystem (3) umfasst, wobei die erzeugte Aktivierungssignalisierung basierend auf ausgehandelten Risikoklassenkriterien (110, 111, 112) angepasst wird.

38. Verfahren nach einem der Ansprüche 22 bis 37, **dadurch gekennzeichnet, dass** die eine oder mehreren Risikoklassen (101, 102, 103) einem oder mehreren Risikoklassenkriterien (110, 111, 112) zugeordnet sind, und dass das System (1) ferner eines oder mehrere der Kriterien (110, 111, 112) modifiziert und das relative Risikoverhältnis neu bestimmt und eine Auswirkung der Modifikation auf die relativen Risiken (918, 928, 938), die den Produkten zugeordnet sind, bestimmt.

39. Verfahren nach einem der Ansprüche 22 bis 38, **dadurch gekennzeichnet, dass** eine oder mehrere der Risikoklassen (101, 102, 103) unterschiedlichen Kriterien (110, 111, 112) zugeordnet werden, und dass das System (1) ferner die Risikoklassen (101, 102, 103) basierend auf den relativen Risikoverhältnissen vergleicht.

40. Verfahren nach einem der Ansprüche 22 bis 39, **dadurch gekennzeichnet, dass** das System (1) ferner eine oder mehrere der Risikoklassen (101, 102, 103) basierend auf dem relativen Risikoverhältnis neu definiert.

41. Verfahren nach Anspruch 40, **dadurch gekennzeichnet, dass** das System (1) ferner ein separates relatives Risikoverhältnis für Teilgruppen von Risiken bestimmt.

42. Verfahren nach einem der Ansprüche 22 bis 41, **dadurch gekennzeichnet, dass** das System (1) ferner die Prävalenzdaten mit empirischen Daten der Industrie für besondere Kombinationen von Risikoklassenkriterien (110, 111, 112) vergleicht und die gespeicherten Daten einstellt, damit sie mit den empirischen Daten übereinstimmen.

## Revendications

1. Système automatisé de classification et de signalisation de la mortalité en temps réel (1), fonctionnant de manière autonome pour l'évaluation et l'ajustement des risques en temps réel, sur la base d'un processus de triage multiniveaux sélectif automatisé (81, 82, 83) reposant sur des moyens électroniques et techniques, un flux de processus et une commande/fonctionnement du processus, dans lequel les risques (913, 923, 933) corrélés à une pluralité de individus exposés aux risques (91, 92, 93) sont au moins partiellement transférables d'un individu exposé aux risques (91, 92, 93) à un premier système d'assurance automatisé électroniquement (2) et/ou du premier système d'assurance automatisé électroniquement (2) à un deuxième système d'assurance automatisé électroniquement associé (3), dans lequel un risque (913, 923, 933) est lié à la probabilité de survenue d'un événement à risque vital pour un individu exposé aux risques (91, 92, 93), sur la base de paramètres de mesure physiques définis permettant de détecter la survenue d'un évènement à risque au niveau de l'individu exposé au risque (91, 92, 93), dans lequel le système (1) comprend une table (10) avec des classes de risque stockées et récupérables (101, 102, 103), comprenant chacune des critères de classe de risque attribués (110, 111, 112), dans lequel les paramètres spécifiques aux individus (911, 921, 931) des individus exposés au risque (91, 92, 93) sont recueillis en relation avec les critères (110, 111, 112) des classes de risque stockées (101, 102, 103) au moyen du système (1) et stockés dans une unité de référentiel (6) et dans lequel une classe de risque spécifique (101, 102, 103) associée au risque (913, 923, 933) de l'individu exposé aux risques (91, 92, 93) est identifiée et sélectionnée sur la base desdites classes de risque stockées (101, 102, 103) au moyen du système (1) sur la base des paramètres spécifiques aux individus recueillis (911, 921, 931), **caractérisé en ce que**
le fonctionnement du système (1) est contrôlé, surveillé et piloté dynamiquement par un module de commande (7) avec un module de reconnaissance de profils associé basé sur l'apprentissage automatique (8), dans lequel les paramètres spécifiques aux individus (911, 921, 931) des individus exposés au risque (91, 92, 93) comprennent au moins des paramètres spécifiques aux individus (916, 926, 936) indiquant une auto-déclaration recueillie de fumeur ou de non-fumeur des individus exposés au risque (91, 92, 93) et des données d'état de santé basées sur des tests de dépistage médical et des données d'antécédents familiaux de déficiences des individus exposés au risque (91, 92, 93) recueillies par des dispositifs de collecte ou de mesure (914, 924, 934),
lors du déclenchement (71/711) des paramètres spécifiques aux individus (916, 926, 936) indiquant une auto-déclaration de tabagisme (8111, 8112, 8113) d'un individu exposé aux risques (91, 92, 93) au moyen des premiers paramètres de déclenchement (7111, 7112, 7113), l'individu exposé aux risques (91, 92, 93) est automatiquement affecté à un premier canal de triage (81) et lors du déclenchement (71/712) des paramètres spécifiques aux individus (916, 926, 936) indiquant une auto-déclaration de non-tabagisme des individus exposé aux risques (91, 92, 93) au moyen des deuxièmes paramètres de déclenchement (7121, 7122, 7123), les paramètres spécifiques aux individus déclenchés (911, 921, 931) sont traités par le module de reconnaissance de profils basé sur l'apprentissage automatique (8), qui attribue automatiquement les individus exposés au risque (91, 92, 93) avec des profils de non-fumeur détectés (8211, 8212, 8213) à un deuxième canal de triage (82) en tant que non-fumeurs prédits et attribue automatiquement les individus exposés au risque (91, 92, 93) avec des profils de fumeur détectés (8311, 8312, 8313) à un troisième canal de triage (83) en tant que fumeurs prédits,
le module de reconnaissance de profils basé sur l'apprentissage automatique (8) est basé sur un traitement par forêt aléatoire comme structure d'apprentissage d'ensemble pour la classification, la régression et la prédiction, ou sur une machine à amplification de gradient (GBM) comme structure d'apprentissage automatique pour la régression, la classification et la prédiction, ou sur des machines à vecteurs de support (SVM) comme structure d'apprentissage à machine supervisée pour la régression, la classification et la prédiction, ou régression logistique, en tant que structure d'apprentissage automatique pour la régression, la classification et la prédiction, dans lequel la probabilité d'une réponse binaire est estimée sur la base d'un ou plusieurs paramètres spécifiques à l'individu (911, 921, 931) comme prédicteurs, dans lequel les paramètres d'entrée recueillis sont des paramètres de mesure non liés au tabagisme, comprenant au moins des données démographiques, des données relatives à l'emploi, des paramètres sur la consommation antérieure de tabac, des paramètres médicaux, des données d'antécédents familiaux et le lieu de résidence, reliant ainsi le demandeur aux caractéristiques de la communauté dans lequel le demandeur réside,
pour les individus exposé aux risques détectés (91, 92, 93) dans le troisième canal de triage (83), le système (1) demande et collecte des paramètres spécifiques à l'individu à l'échelle du laboratoire (915, 925, 935), dans lequel les paramètres spécifiques à l'individu à l'échelle du laboratoire sont mesurés au moyen d'appareils de mesure de laboratoire (914, 924, 934) et les paramètres spécifiques aux individus spécifiques à l'échelle du laboratoire (915, 925, 935) sont déclenchés pour tabagisme mesuré et tabagisme non mesuré,
pour l'évaluation du risque en temps réel, un facteur de mortalité relative (918, 928, 938) est calculé sur la base des données spécifiques aux individus relatives au risque recueillies (911, 921, 931) et du paramètre de tabagisme ou de non-tabagisme mesuré correspondant au canal attribué (81, ..., 83), dans lequel le facteur de mortalité relative (918, 928, 938) est mesuré sur la base du paramètre spécifique à l'individu recueilli (911, 921, 931) attribuable aux critères de classe de risque correspondants (110, 111, 112) des classes de risque (101, 102, 103), dans lequel les critères de classe de risque (110, 111, 112) comprennent au moins un critère de classe de risque (101) indiquant le statut de fumeur ou non-fumeur et dans lequel, pour les individus exposés au risque (91, 92, 93) dans le premier canal de triage (81), le critère de classe de risque (101) indiquant le statut de fumeur ou de non-fumeur est automatiquement défini sur fumeur, pour les individus exposés au risque (91, 92, 93) dans le deuxième canal de triage (82) sur non-fumeur, et pour les individus exposés au risque (91, 92, 93) dans le troisième canal de triage (83) selon les paramètres de tabagisme ou de non-tabagisme mesurés en laboratoire (915, 925, 935),
sur la base de l'évaluation du risque en temps réel au moyen du facteur de mortalité relative mesuré (918, 928, 938), le risque associé à l'individu exposé aux risques (91, 92, 93) est transférable de l'individu exposé aux risques (91, 92, 93) à un premier système d'assurance (2) et/ou du premier système d'assurance (2) au deuxième système d'assurance associé (3),
pour transférer un risque associé à l'individu exposé aux risques (91, 92, 93) de l'individu exposé aux risques (91, 92, 93) à un premier système d'assurance (2) et/ou du premier système d'assurance (2) au deuxième système d'assurance associé (3), un signal d'activation approprié est généré par le système automatisé (1) au moyen du circuit de commande (7) et transmis au premier système d'assurance (2) et/ou au deuxième système d'assurance associé (3) et dans lequel le transfert de risque est synchronisé entre les deux systèmes d'assurance (2/3), et
le système (1) est opérationnel dans un processus de validation continu dirigeant un pourcentage défini d'individus exposés au risque (91, 92, 93) avec des profils de non-fumeur détectés (8211, 8212, 8213) vers le troisième canal de triage (83) demandant et recueillant des paramètres spécifiques aux individus spécifiques à l'échelle du laboratoire (915, 925, 935), et comparant les paramètres spécifiques aux individus spécifiques à l'échelle du laboratoire recueillis (915, 925, 935) aux profils de fumeur ou de non-fumeur prédits et réapprenant le module de reconnaissance de profils basé sur l'apprentissage automatique (8) et un modèle prédictif si la comparaison indique des taux d'erreur élevés.

2. Système (1) selon la revendication 1, **caractérisé en ce que** le module de reconnaissance de profils basé sur l'apprentissage automatique (8) est basé sur un traitement par forêt aléatoire comme structure d'apprentissage d'ensemble pour la classification, la régression et la prédiction, dans lequel le module de reconnaissance de profils (8) fonctionne en construisant une multitude d'arbres de décision pendant l'entraînement et en fournissant la classe qui est le mode des classes ou la prédiction moyenne comme régression des arbres individuels.

3. Système (1) selon une des revendications 1 ou 2, **caractérisé en ce que** le module de reconnaissance de profils (8) basé sur l'apprentissage automatique est basé sur l'amplification de gradient (GBM) comme structure d'apprentissage automatique pour la régression, la classification et la prédiction, dans lequel le module de reconnaissance de profils (8) opère sur un ensemble de structures de prédiction faibles utilisant des classificateurs faiblement corrélés à la classification réelle et optimisés au moyen d'une fonction de perte différentiable arbitraire.

4. Système (1) selon une des revendications 1 à 3, **caractérisé en ce que** le module de reconnaissance de profils basé sur l'apprentissage automatique (8) est basé sur des machines à vecteurs de support (SVM) comme structure d'apprentissage automatique pour la régression, la classification et la prédiction, dans lequel pour des ensembles donnés de paramètres spécifiques aux individus (911, 921, 931) des individus exposés au risque (91, 92, 93), chacun est classé dans une des deux catégories définissables et dans lequel le module de reconnaissance de profils (8) construit une structure en assignant de nouveaux ensembles à une ou l'autre catégorie, ce qui en fait un classificateur linéaire binaire non probabiliste.

5. Système (1) selon une des revendications 1 à 3, **caractérisé en ce que** le module de reconnaissance de profils (8) basé sur l'apprentissage automatique est basé sur la régression logistique comme structure d'apprentissage automatique pour la régression, la classification et la prédiction, dans lequel la probabilité d'une réponse binaire est estimée sur la base d'un ou plusieurs paramètres spécifiques aux individus (911, 921, 931) comme prédicteurs.

6. Système (1) selon une des revendications 1 à 5, **caractérisé en ce que** le système (1) comprend un ou plusieurs des premiers systèmes de transfert de risques (2) pour effectuer ledit premier transfert de risques sur la base des premiers paramètres de transfert de risques (211, 212, 213), provenant d'au moins certains des individus exposés au risque (91, 92, 93) au premier système de transfert de risque (2), dans lequel le premier système de transfert de risques (2) comprend une pluralité de modules de virement (22) configurés pour recevoir et stocker (23) les premiers paramètres de paiement (221, 222, 223) corrélés au transfert des expositions au risque (9) desdits individus exposées au risque (91, 92, 93) en vue de la mutualisation de leurs risques (913, 923, 933).

7. Système (1) selon la revendication 6, **caractérisé en ce que**, via le circuit de commande basé sur l'apprentissage automatique (7) du système (1), les données spécifiques aux individus relatives au risque (911, 921, 931) recueillies auprès des individus exposés au risque (91, 92, 93) sont traitées, dans lequel lesdits premiers paramètres de transfert de risque (211, 212, 213) et premiers paramètres de virement corrélés (221, 222, 223) sont générés par le circuit de commande basé sur l'apprentissage automatique (7) et transmis au premier système de transfert de risque (2), et dans lequel, dans le cas du déclenchement de la survenue d'un des événements de risque définis (721, 722, 723) corrélés à l'exposition au risque transférée (913, 923, 933) des individus exposés au risque (91, 92, 93), la perte survenue (917, 927, 937) est automatiquement couvert par le premier système de transfert de risques (2) sur la base des premiers paramètres de transfert de risques (211, 212, 213) et des premiers paramètres de virement corrélés (221, 222, 223).

8. Système (1) selon une des revendications 1 à 7, **caractérisé en ce que** le système (1) comprend un deuxième système de transfert de risques (3) pour effectuer un deuxième transfert de risques sur la base des deuxièmes paramètres de transfert de risques (311, 312, 313), d'un ou plusieurs des premiers systèmes de transfert de risques (2) vers le deuxième système de transfert de risques (3), dans lequel le deuxième système de transfert de risques (3) comprend des deuxièmes modules de virement (31) configurés pour recevoir et stocker (32) les deuxièmes paramètres de paiement (321, 322, 323) en vue de la mutualisation des risques (9) des premiers systèmes de transfert de risques (2) corrélés aux expositions aux risques transférées aux premiers systèmes de transfert de risques (2).

9. Système (1) selon la revendication 8, **caractérisé en ce que** les deuxièmes paramètres de transfert de risque (211, 212, 213) et les deuxièmes paramètres de virement corrélés (311, 312, 313) sont générés par le circuit de commande basé sur l'apprentissage automatique (7) et transmis au deuxième système de transfert de risque (3), dans lequel la perte survenue (917, 927, 937) est au moins partiellement couverte par le deuxième système d'assurance (3) sur la base des deuxièmes paramètres de transfert de risque (311, 312, 313) et des deuxièmes paramètres de virement corrélés (321, 322, 323).

10. Système (1) selon une des revendications 8 ou 9, **caractérisé en ce que** les premier et deuxième paramètres de transfert de risque (211, 212, 213/311, 312, 313) et les premier et deuxième paramètres de virement corrélés (221, 222, 223/321, 322, 323) sont adaptés et/ou optimisés dynamiquement au moyen du circuit de commande et de signalisation basé sur l'apprentissage automatique (7) sur la base des données spécifiques aux individus relatives au risque (911, 921, 931) et des paramètres spécifiques aux individus spécifiques confirmés en laboratoire (915, 925, 935) ainsi que l'affectation des individus exposés au risque (91, 92, 93) aux premier, deuxième ou troisième canaux respectifs (81/82/83), et sur la mutualisation des risques (9) des premiers systèmes de transfert de risque (2).

11. Système (1) selon une des revendications 8 à 10, **caractérisé en ce que** les premier et deuxième paramètres de transfert de risque (211, 212, 213/311, 312, 313) et les premier et deuxième paramètres de virement corrélés (221, 222, 223/321, 322, 323) sont adaptés et/ou optimisés dynamiquement au moyen du circuit de commande et de signalisation basé sur l'apprentissage automatique (7), basé en outre sur la mesure de l'impact financier des erreurs de prédiction dues à une mauvaise classification des individus exposés au risque (91, 92, 93) (fumeurs classés comme non-fumeurs), par rapport aux économies réalisées en s'affranchissant des tests de laboratoire pour la majorité des demandeurs.

12. Système (1) selon une des revendications 1 à 11, **caractérisé en ce que** en déclenchant des paramètres prédéfinis de détection de tabagisme ou de non-tabagisme (8211, 8212, 8213/8311, 8312, 8313) dans les données spécifiques aux individus relatives aux risques recueillies (911, 921, 931), des paramètres spécifiques aux individus supplémentaires sont demandés par le système (1) et transmis à une unité de commande indépendante (4), dans lequel seulement après réception de la confirmation de transmission de l'unité de commande (4), le système automatisé de classification de mortalité et de souscription (1) accepte un éventuel transfert de risque pour l'individu (91, 92, 93) pour les classes (101, 102, 103) en transmettant les données d'acceptation ou de refus appropriées.

13. Système (1) selon une des revendications 1 à 12, **caractérisé en ce que** les risques associés à une pluralité de personnes exposées aux risques (91, 92, 93) sont au moins partiellement transférables sur une base facultative au moyen du système automatisé de classification de mortalité et de souscription (1) d'un individu exposé au risque (91, 92, 93) vers un premier système d'assurance (2) et/ou du premier système d'assurance (2) vers un deuxième système d'assurance associé (3), si le dépassement d'un seuil d'incertitude prédéfini est détecté sur la base des profils de non-fumeur (8211, 8212, 8213) et/ou des profils de fumeur (8311, 8312, 8313) détectés.

14. Système (1) selon une des revendications 1 à 13, **caractérisé en ce que** chacune des classes de risque (101, 102, 103) du tableau (10) avec des classes de risque stockées et récupérables (101, 102, 103) est associée à au moins un produit financier accessible dans un magasin de données dédié, dans lequel le système (1) détermine un taux d'occurrence attendu pour chacune des classes de risque (101, 102, 103), dans lequel le système (1) divise les taux d'occurrence attendus par un taux moyen et détermine un ratio de risque relatif comme profil de facteur de mortalité relative (918, 928, 938) pour chacune des classes de risque (101, 102, 103) sur la base des données relatives aux critères (110, 111, 112) associées auxdites classes de risque (101, 102, 103), dans lequel le système (1) calcule les ratios de risques corrélés entre au moins deux des classes de risque (101, 102, 103) identifiées lors de ladite étape d'identification et de détermination de dépendance au moins deux classes de risque différentes (101, 102, 103), dans lequel le système (1) compare les ratios de risques relatifs et les ratios de risques corrélés aux données empiriques et génère des données de risques comparatifs afin de caractériser les risques relatifs corrélés à la pluralité de produits, dans lequel le système (1) corrige les ratios de risques relatifs si les données de risques comparatifs s'écartent des données empiriques dans une plage définie et dans lequel le signal d'activation généré est adapté sur la base des ratios de risques corrigés.

15. Système (1) selon la revendication 14, **caractérisé en ce que** pour les paramètres spécifiques aux individus recueillis (911, 921, 931) de l'individu exposé au risque (91, 92, 93), comprenant au moins l'âge, le sexe et le montant du capital assuré comme données spécifiques aux individus relatives aux risque (911, 921, 931), les exigences et/ou les plages de paramètres sont générées par le système (1) pour un produit d'assurance-vie ou financier spécifique au client, présentant une valeur actuelle nette (VAN) positive donnée par la somme des valeurs actuelles (VA) des virements entrants (221, 222, 223) vers le premier système d'assurance (2) et des virements sortants couvrant la perte survenue (917, 927, 937) chez un individu exposé au risque (91, 92, 93).

16. Système (1) selon une des revendications 1 à 15, **caractérisé en ce que** le système (1) comprend des moyens de négociation automatique des critères de classe de risque (110, 111, 112) entre le premier système d'assurance (2) et le deuxième système d'assurance (3), dans lequel la signalisation d'activation générée est adaptée sur la base des critères de classe de risque négociés (110, 111, 112).

17. Système (1) selon une des revendications 1 à 16, **caractérisé en ce qu'**une ou plusieurs classes de risque (101, 102, 103) sont associées à un ou plusieurs critères de classe de risque (110, 111, 112) et le système (1) modifie en outre un ou plusieurs desdits critères (110, 111, 112) et redétermine le ratio de risque relatif et détermine un impact de ladite modification sur les risques relatifs (918, 928, 938) associés aux produits.

18. Système (1) selon une des revendications 1 à 17, **caractérisé en ce qu'**une ou plusieurs desdites classes de risque (101, 102, 103) sont associées à différents critères (110, 111, 112) et le système (1) compare en outre les classes de risque (101, 102, 103) sur la base desdits ratios de risque relatif.

19. Système (1) selon une des revendications 1 à 18, **caractérisé en ce que** le système (1) redéfinit en outre une ou plusieurs desdites classes de risque (101, 102, 103) sur la base du ratio de risque relatif.

20. Système (1) selon une des revendications 1 à 19, **caractérisé en ce que** le système (1) détermine en outre un ratio de risque relatif distinct pour les sous-groupes de risques.

21. Système (1) selon une des revendications 1 à 20, **caractérisé en ce que** le système (1) compare en outre les données de prévalence aux données empiriques du secteur pour des combinaisons particulières de critères de classe de risque (110, 111, 112), et ajuste les données stockées pour qu'elles correspondent aux données empiriques.

22. Procédé automatisé de classification et de signalisation de mortalité en temps réel pour l'évaluation des risques, l'ajustement et la souscription des risques en temps réel au moyen d'un système automatisé (1) à fonctionnement autonome, sur la base d'une structure de triage multiniveaux sélectif automatisé (81, 82, 83) reposant sur des moyens électroniques et techniques, un flux de processus et une commande/fonctionnement du processus, dans lequel les risques (913, 923, 933) corrélés à une pluralité de individus exposés aux risques (91, 92, 93) sont au moins partiellement transférables d'un individu exposé aux risques (91, 92, 93) à un premier système d'assurance automatisé électroniquement (2) et/ou du premier système d'assurance automatisé électroniquement (2) à un deuxième système d'assurance automatisé électroniquement associé (3), dans lequel un risque (913, 923, 933) est lié à la probabilité de survenue d'un événement à risque vital pour un individu exposé aux risques (91, 92, 93), sur la base de paramètres de mesure physiques définis permettant de détecter la survenue d'un évènement à risque au niveau de l'individu exposé au risque (91, 92, 93), dans lequel le système (1) comprend une table (10) avec des classes de risque stockées et récupérables (101, 102, 103), comprenant chacune des critères de classe de risque attribués (110, 111, 112), dans lequel les paramètres spécifiques aux individus (911, 921, 931) des individus exposés au risque (91, 92, 93) sont recueillis en relation avec les critères (110, 111, 112) des classes de risque stockées (101, 102, 103) au moyen du système (1) et stockés dans une unité de référentiel (6) et dans lequel une classe de risque spécifique (101, 102, 103) associée au risque (913, 923, 933) de l'individu exposé aux risques (91, 92, 93) est identifiée et sélectionnée sur la base desdites classes de risque stockées (101, 102, 103) au moyen du système (1) sur la base des paramètres spécifiques aux individus recueillis (911, 921, 931), **caractérisé en ce que**
le fonctionnement du système (1) est contrôlé, surveillé et piloté dynamiquement par un module de commande (7) avec un module de reconnaissance de profils associé basé sur l'apprentissage automatique (8), dans lequel les paramètres spécifiques aux individus (911, 921, 931) des individus exposés au risque (91, 92, 93) comprennent au moins des paramètres spécifiques aux individus (916, 926, 936) indiquant une auto-déclaration recueillie de fumeur ou de non-fumeur des individus exposés au risque (91, 92, 93) et des données d'état de santé basées sur des tests de dépistage médical et des données d'antécédents familiaux de déficiences des individus exposés au risque (91, 92, 93) recueillies par des dispositifs de collecte ou de mesure (914, 924, 934),
lors du déclenchement (71/711) des paramètres spécifiques aux individus (916, 926, 936) indiquant une auto-déclaration de tabagisme (8111, 8112, 8113) d'un individu exposé aux risques (91, 92, 93) au moyen des premiers paramètres de déclenchement (7111, 7112, 7113), l'individu exposé aux risques (91, 92, 93) est automatiquement affecté à un premier canal de triage (81) et lors du déclenchement (71/712) des paramètres spécifiques aux individus (916, 926, 936) indiquant une auto-déclaration de non-tabagisme des individus exposé aux risques (91, 92, 93) au moyen des deuxièmes paramètres de déclenchement (7121, 7122, 7123), les paramètres spécifiques aux individus déclenchés (911, 921, 931) sont traités par le module de reconnaissance de profils basé sur l'apprentissage automatique (8), qui attribue automatiquement les individus exposés au risque (91, 92, 93) avec des profils de non-fumeur détectés (8211, 8212, 8213) à un deuxième canal de triage (82) en tant que non-fumeurs prédits et attribue automatiquement les individus exposés au risque (91, 92, 93) avec des profils de fumeur détectés (8311, 8312, 8313) à un troisième canal de triage (83) en tant que fumeurs prédits,
le module de reconnaissance de profils basé sur l'apprentissage automatique (8) est basé sur un traitement par forêt aléatoire comme structure d'apprentissage d'ensemble pour la classification, la régression et la prédiction, ou sur une machine à amplification de gradient (GBM) comme structure d'apprentissage automatique pour la régression, la classification et la prédiction, ou sur des machines à vecteurs de support (SVM) comme structure d'apprentissage à machine supervisée pour la régression, la classification et la prédiction, ou régression logistique, en tant que structure d'apprentissage automatique pour la régression, la classification et la prédiction, dans lequel la probabilité d'une réponse binaire est estimée sur la base d'un ou plusieurs paramètres spécifiques à l'individu (911, 921, 931) comme prédicteurs, dans lequel les paramètres d'entrée recueillis sont des paramètres de mesure non liés au tabagisme, comprenant au moins des données démographiques, des données relatives à l'emploi, des paramètres sur la consommation antérieure de tabac, des paramètres médicaux, des données d'antécédents familiaux et le lieu de résidence, reliant ainsi le demandeur aux caractéristiques de la communauté dans lequel le demandeur réside,
pour les individus exposé aux risques détectés (91, 92, 93) dans le troisième canal de triage (83), le système (1) demande et collecte des paramètres spécifiques à l'individu à l'échelle du laboratoire (915, 925, 935), dans lequel les paramètres spécifiques à l'individu à l'échelle du laboratoire (915, 925, 935) sont mesurés au moyen d'appareils de mesure de laboratoire (914, 924, 934) et les paramètres spécifiques aux individus spécifiques à l'échelle du laboratoire (915, 925, 935) sont déclenchés pour tabagisme mesuré et tabagisme non mesuré,
pour l'évaluation du risque en temps réel, un facteur de mortalité relative (918, 928, 938) est calculé sur la base des données spécifiques aux individus relatives au risque recueillies (911, 921, 931) et du paramètre de tabagisme ou de non-tabagisme mesuré correspondant au canal attribué (81, ..., 83), dans lequel le facteur de mortalité relative (918, 928, 938) est mesuré sur la base du paramètre spécifique à l'individu recueilli (911, 921, 931) attribuable aux critères de classe de risque correspondants (110, 111, 112) des classes de risque (101, 102, 103), dans lequel les critères de classe de risque (110, 111, 112) comprennent au moins un critère de classe de risque (101) indiquant le statut de fumeur ou non-fumeur et dans lequel, pour les individus exposés au risque (91, 92, 93) dans le premier canal de triage (81), le critère de classe de risque (101) indiquant le statut de fumeur ou de non-fumeur est automatiquement défini sur fumeur, pour les individus exposés au risque (91, 92, 93) dans le deuxième canal de triage (82) sur non-fumeur, et pour les individus exposés au risque (91, 92, 93) dans le troisième canal de triage (83) selon les paramètres de tabagisme ou de non-tabagisme mesurés en laboratoire (915, 925, 935),
sur la base de l'évaluation du risque en temps réel au moyen du facteur de mortalité relative mesuré (918, 928, 938), le risque associé à l'individu exposé aux risques (91, 92, 93) est transférable de l'individu exposé aux risques (91, 92, 93) à un premier système d'assurance (2) et/ou du premier système d'assurance (2) au deuxième système d'assurance associé (3),
pour transférer un risque associé à l'individu exposé aux risques (91, 92, 93) de l'individu exposé aux risques (91, 92, 93) à un premier système d'assurance (2) et/ou du premier système d'assurance (2) au deuxième système d'assurance associé (3), un signal d'activation approprié est généré par le système automatisé (1) au moyen du circuit de commande (7) et transmis au premier système d'assurance (2) et/ou au deuxième système d'assurance associé (3) et dans lequel le transfert de risque est synchronisé entre les deux systèmes d'assurance (2/3), et
le système (1) est opérationnel dans un processus de validation continu dirigeant un pourcentage défini d'individus exposés au risque (91, 92, 93) avec des profils de non-fumeur détectés (8211, 8212, 8213) vers le troisième canal de triage (83) demandant et recueillant des paramètres spécifiques aux individus spécifiques à l'échelle du laboratoire (915, 925, 935), et comparant les paramètres spécifiques aux individus spécifiques à l'échelle du laboratoire recueillis (915, 925, 935) aux profils de fumeur ou de non-fumeur prédits et réapprenant le module de reconnaissance de profils basé sur l'apprentissage automatique (8) et un modèle prédictif si la comparaison indique des taux d'erreur élevés.

23. Procédé selon la revendication 22, **caractérisé en ce que** le module de reconnaissance de profils basé sur l'apprentissage automatique (8) est basé sur un traitement par forêt aléatoire comme structure d'apprentissage d'ensemble pour la classification, la régression et la prédiction, dans lequel le module de reconnaissance de profils (8) fonctionne en construisant une multitude d'arbres de décision pendant l'entraînement et en fournissant la classe qui est le mode des classes ou la prédiction moyenne comme régression des arbres individuels.

24. Procédé selon une des revendications 22 ou 23, **caractérisé en ce que** le module de reconnaissance de profils (8) basé sur l'apprentissage automatique est basé sur l'amplification de gradient (GBM) comme structure d'apprentissage automatique pour la régression, la classification et la prédiction, dans lequel le module de reconnaissance de profils (8) opère sur un ensemble de structures de prédiction faibles utilisant des classificateurs faiblement corrélés à la classification réelle et optimisés au moyen d'une fonction de perte différentiable arbitraire.

25. Procédé selon une des revendications 22 à 24, **caractérisé en ce que** le module de reconnaissance de profils basé sur l'apprentissage automatique (8) est basé sur des machines à vecteurs de support (SVM) comme structure d'apprentissage automatique pour la régression, la classification et la prédiction, dans lequel pour des ensembles donnés de paramètres spécifiques aux individus (911, 921, 931) des individus exposés au risque (91, 92, 93), chacun est classé dans une des deux catégories définissables et dans lequel le module de reconnaissance de profils (8) construit une structure en assignant de nouveaux ensembles à une ou l'autre catégorie, ce qui en fait un classificateur linéaire binaire non probabiliste.

26. Procédé selon une des revendications 22 à 25, **caractérisé en ce que** le module de reconnaissance de profils (8) basé sur l'apprentissage automatique est basé sur la régression logistique comme structure d'apprentissage automatique pour la régression, la classification et la prédiction, dans lequel la probabilité d'une réponse binaire est estimée sur la base d'un ou plusieurs paramètres spécifiques aux individus (911, 921, 931) comme prédicteurs.

27. Procédé selon une des revendications 22 à 26, **caractérisé en ce que** le système (1) comprend un ou plusieurs des premiers systèmes de transfert de risques (2) pour effectuer ledit premier transfert de risques sur la base des premiers paramètres de transfert de risques (211, 212, 213), provenant d'au moins certains des individus exposés au risque (91, 92, 93) au premier système de transfert de risque (2), dans lequel le premier système de transfert de risques (2) comprend une pluralité de modules de virement (22) configurés pour recevoir et stocker (23) les premiers paramètres de paiement (221, 222, 223) corrélés au transfert des expositions au risque (9) desdits individus exposées au risque (91, 92, 93) en vue de la mutualisation de leurs risques (913, 923, 933).

28. Procédé selon la revendication 27, **caractérisé en ce que** via le circuit de commande basé sur l'apprentissage automatique (7) du système (1), les données spécifiques aux individus relatives au risque (911, 921, 931) recueillies auprès des individus exposés au risque (91, 92, 93) sont traitées, dans lequel lesdits premiers paramètres de transfert de risque (211, 212, 213) et premiers paramètres de virement corrélés (221, 222, 223) sont générés par le circuit de commande basé sur l'apprentissage automatique (7) et transmis au premier système de transfert de risque (2), et dans lequel, dans le cas du déclenchement de la survenue d'un des événements de risque définis (721, 722, 723) corrélés à l'exposition au risque transférée (913, 923, 933) des individus exposés au risque (91, 92, 93), la perte survenue (917, 927, 937) est automatiquement couvert par le premier système de transfert de risques (2) sur la base des premiers paramètres de transfert de risques (211, 212, 213) et des premiers paramètres de virement corrélés (221, 222, 223).

29. Procédé selon une des revendications 22 à 28, **caractérisé en ce que** le système (1) comprend un deuxième système de transfert de risques (3) pour effectuer un deuxième transfert de risques sur la base des deuxièmes paramètres de transfert de risques (311, 312, 313), d'un ou plusieurs des premiers systèmes de transfert de risques (2) vers le deuxième système de transfert de risques (3), dans lequel le deuxième système de transfert de risques (3) comprend des deuxièmes modules de virement (31) configurés pour recevoir et stocker (32) les deuxièmes paramètres de paiement (321, 322, 323) en vue de la mutualisation des risques (9) des premiers systèmes de transfert de risques (2) corrélés aux expositions aux risques transférées aux premiers systèmes de transfert de risques (2).

30. Procédé selon la revendication 29, **caractérisé en ce que** les deuxièmes paramètres de transfert de risque (211, 212, 213) et les deuxièmes paramètres de virement corrélés (311, 312, 313) sont générés par le circuit de commande basé sur l'apprentissage automatique (7) et transmis au deuxième système de transfert de risque (3), dans lequel la perte survenue (917, 927, 937) est au moins partiellement couverte par le deuxième système d'assurance (3) sur la base des deuxièmes paramètres de transfert de risque (311, 312, 313) et des deuxièmes paramètres de virement corrélés (321, 322, 323).

31. Procédé selon une des revendications 29 ou 30, **caractérisé en ce que** les premier et deuxième paramètres de transfert de risque (211, 212, 213/311, 312, 313) et les premier et deuxième paramètres de virement corrélés (221, 222, 223/321, 322, 323) sont adaptés et/ou optimisés dynamiquement au moyen du circuit de commande et de signalisation basé sur l'apprentissage automatique (7) sur la base des données spécifiques aux individus relatives au risque (911, 921, 931) et des paramètres spécifiques aux individus spécifiques confirmés en laboratoire (915, 925, 935) ainsi que l'affectation des individus exposés au risque (91, 92, 93) aux premier, deuxième ou troisième canaux respectifs (81/82/83), et sur la mutualisation des risques (9) des premiers systèmes de transfert de risque (2).

32. Procédé selon une des revendications 29 à 31, **caractérisé en ce que** les premier et deuxième paramètres de transfert de risque (211, 212, 213/311, 312, 313) et les premier et deuxième paramètres de virement corrélés (221, 222, 223/321, 322, 323) sont adaptés et/ou optimisés dynamiquement au moyen du circuit de commande et de signalisation basé sur l'apprentissage automatique (7), basé en outre sur la mesure de l'impact financier des erreurs de prédiction dues à une mauvaise classification des individus exposés au risque (91, 92, 93) (fumeurs classés comme non-fumeurs), par rapport aux économies réalisées en s'affranchissant des tests de laboratoire pour la majorité des demandeurs.

33. Procédé selon une des revendications 22 à 32, **caractérisé en ce que** en déclenchant des paramètres prédéfinis de détection de tabagisme ou de non-tabagisme (8211, 8212, 8213/8311, 8312, 8313) dans les données spécifiques aux individus relatives aux risques recueillies (911, 921, 931), des paramètres spécifiques aux individus supplémentaires sont demandés par le système (1) et transmis à une unité de commande indépendante (4), dans lequel seulement après réception de la confirmation de transmission de l'unité de commande (4), le système automatisé de classification de mortalité et de souscription (1) accepte un éventuel transfert de risque pour l'individu (91, 92, 93) pour les classes (101, 102, 103) en transmettant les données d'acceptation ou de refus appropriées.

34. Procédé selon une des revendications 22 à 33, **caractérisé en ce que** les risques associés à une pluralité de personnes exposées aux risques (91, 92, 93) sont au moins partiellement transférables sur une base facultative au moyen du système automatisé de classification de mortalité et de souscription (1) d'un individu exposé au risque (91, 92, 93) vers un premier système d'assurance (2) et/ou du premier système d'assurance (2) vers un deuxième système d'assurance associé (3), si le dépassement d'un seuil d'incertitude prédéfini est détecté sur la base des profils de non-fumeur (8211, 8212, 8213) et/ou des profils de fumeur (8311, 8312, 8313) détectés.

35. Procédé selon une des revendications 22 à 34, **caractérisé en ce que** chacune des classes de risque (101, 102, 103) du tableau (10) avec des classes de risque stockées et récupérables (101, 102, 103) est associée à au moins un produit financier accessible dans un magasin de données dédié, dans lequel le système (1) détermine un taux d'occurrence attendu pour chacune des classes de risque (101, 102, 103), dans lequel le système (1) divise les taux d'occurrence attendus par un taux moyen et détermine un ratio de risque relatif comme profil de facteur de mortalité relative (918, 928, 938) pour chacune des classes de risque (101, 102, 103) sur la base des données relatives aux critères (110, 111, 112) associées auxdites classes de risque (101, 102, 103), dans lequel le système (1) calcule les ratios de risques corrélés entre au moins deux des classes de risque (101, 102, 103) identifiées lors de ladite étape d'identification et de détermination de dépendance au moins deux classes de risque différentes (101, 102, 103), dans lequel le système (1) compare les ratios de risques relatifs et les ratios de risques corrélés aux données empiriques et génère des données de risques comparatifs afin de caractériser les risques relatifs corrélés à la pluralité de produits, dans lequel le système (1) corrige les ratios de risques relatifs si les données de risques comparatifs s'écartent des données empiriques dans une plage définie et dans lequel le signal d'activation généré est adapté sur la base des ratios de risques corrigés.

36. Procédé selon la revendication 35, **caractérisé en ce que** pour les paramètres spécifiques aux individus recueillis (911, 921, 931) de l'individu exposé au risque (91, 92, 93), comprenant au moins l'âge, le sexe et le montant du capital assuré comme données spécifiques aux individus relatives aux risque (911, 921, 931), les exigences et/ou les plages de paramètres sont générées par le système (1) pour un produit d'assurance-vie ou financier spécifique au client, présentant une valeur actuelle nette (VAN) positive donnée par la somme des valeurs actuelles (VA) des virements entrants (221, 222, 223) vers le premier système d'assurance (2) et des virements sortants couvrant la perte survenue (917, 927, 937) chez un individu exposé au risque (91, 92, 93).

37. Procédé selon une des revendications 22 à 36, **caractérisé en ce que** le système (1) comprend des moyens de négociation automatique des critères de classe de risque (110, 111, 112) entre le premier système d'assurance (2) et le deuxième système d'assurance (3), dans lequel la signalisation d'activation générée est adaptée sur la base des critères de classe de risque négociés (110, 111, 112).

38. Procédé selon une des revendications 22 à 37, **caractérisé en ce qu'**une ou plusieurs classes de risque (101, 102, 103) sont associées à un ou plusieurs critères de classe de risque (110, 111, 112) et le système (1) modifie en outre un ou plusieurs desdits critères (110, 111, 112) et redétermine le ratio de risque relatif et détermine un impact de ladite modification sur les risques relatifs (918, 928, 938) associés aux produits.

39. Procédé selon une des revendications 22 à 38, **caractérisé en ce qu'**une ou plusieurs desdites classes de risque (101, 102, 103) sont associées à différents critères (110, 111, 112) et le système (1) compare en outre les classes de risque (101, 102, 103) sur la base desdits ratios de risque relatif.

40. Procédé selon une des revendications 22 à 39, **caractérisé en ce que** le système (1) redéfinit en outre une ou plusieurs desdites classes de risque (101, 102, 103) sur la base du ratio de risque relatif.

41. Procédé selon la revendication 40, **caractérisé en ce que** le système (1) détermine en outre un ratio de risque relatif distinct pour les sous-groupes de risques.

42. Procédé selon une des revendications 22 à 41, **caractérisé en ce que** le système (1) compare en outre les données de prévalence aux données empiriques du secteur pour des combinaisons particulières de critères de classe de risque (110, 111, 112) et ajuste les données stockées pour qu'elles correspondent aux données empiriques.
